(19) Europäisches Patentamt / European Patent Office / Office européen des brevets

(11) **EP 4 510 480 A1**

(12) **EUROPEAN PATENT APPLICATION**
published in accordance with Art. 153(4) EPC

(43) Date of publication:
**19.02.2025 Bulletin 2025/08**

(21) Application number: **23787689.1**

(22) Date of filing: **11.04.2023**

(51) International Patent Classification (IPC):
**H04L 1/16** (2023.01)    **H04W 72/20** (2023.01)

(52) Cooperative Patent Classification (CPC):
**H04L 1/1854; H04L 1/16; H04L 1/1607;
H04L 1/1812; H04L 1/1861; H04L 1/1864;
H04L 1/1896; H04W 72/12; H04W 72/20**

(86) International application number:
**PCT/CN2023/087584**

(87) International publication number:
**WO 2023/198045 (19.10.2023 Gazette 2023/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.04.2022   CN 202210382436**

(71) Applicant: **VIVO MOBILE COMMUNICATION CO.,
LTD.
Dongguan, Guangdong 523863 (CN)**

(72) Inventors:
• **LI, Can**
  **Dongguan, Guangdong 523863 (CN)**
• **LIU, Siqi**
  **Dongguan, Guangdong 523863 (CN)**
• **LI, Gen**
  **Dongguan, Guangdong 523863 (CN)**
• **JI, Zichao**
  **Dongguan, Guangdong 523863 (CN)**

(74) Representative: **Conti, Marco
Bugnion S.p.A.
Via di Corticella, 87
40128 Bologna (IT)**

(54) **HARQ ACK FEEDBACK METHOD AND APPARATUS, TERMINAL, AND NETWORK SIDE DEVICE**

(57)    This application discloses a HARQ ACK feedback method and apparatus, a terminal, and a network-side device, pertaining to the field of wireless communications technologies. The HARQ ACK feedback method in embodiments of this application includes: determining, by a terminal, a HARQ ACK bit corresponding to a PDSCH scheduled by each first DCI of at least one first DCI, where each first DCI is used for scheduling PDSCHs of a plurality of cells; and constructing, by the terminal, a HARQ ACK codebook based on the HARQ ACK bits.

Determine a HARQ ACK bit corresponding to a PDSCH scheduled by each first DCI in at least one first DCI, where each first DCI is used for scheduling PDSCHs of a plurality of cells — 31

Constructs a HARQ ACK codebook based on the HARQ ACK bits — 32

FIG. 3

## Description

### CROSS-REFERENCE TO RELATED APPLICATIONS

This application claims priority to Chinese Patent Application No. 202210382436.6, filed in China on April 12, 2022, which is incorporated herein by reference in its entirety.

### TECHNICAL FIELD

This application pertains to the field of wireless communications technologies, and specifically, relates to a HARQ ACK feedback method and apparatus, a terminal, and a network-side device.

### BACKGROUND

At present, scheduling one physical downlink shared channel (Physical Downlink Shared Channel, PDSCH) by one piece of downlink control information (Downlink Control Information, DCI), or scheduling repeated PDSCHs by one DCI, or scheduling multiple PDSCHs in one cell (cell) by one DCI is supported; however, scheduling PDSCHs of a plurality of cells by one DCI is not supported. In the research of R18, a feature of scheduling PDSCHs of a plurality of cells by one DCI is introduced to reduce signaling overheads.

According to the current protocol, in a case of scheduling PDSCHs of a plurality of cells by one DCI, a behavior of performing hybrid automatic repeat request (Hybrid Automatic Repeat reQuest, HARQ) dynamic codebook feedback by user equipment (User Equipment, UE, also referred to a terminal) is unclear; and consequently a base station cannot perform demodulation correctly.

### SUMMARY

Embodiments of this application provide a HARQ acknowledgement (Acknowledgement, ACK) feedback method and apparatus, a terminal, and a network-side device, which can resolve the problem that a behavior of how to perform HARQ codebook feedback is unclear in a case that one DCI is configured for scheduling PDSCHs of a plurality of cells.

According to a first aspect, a HARQ ACK feedback method is provided, including:

determining, by a terminal, a HARQ ACK bit corresponding to a PDSCH scheduled by each first DCI of at least one first DCI, where each first DCI is used for scheduling PDSCHs of a plurality of cells; and

constructing, by the terminal, a HARQ ACK codebook based on the HARQ ACK bits.

According to a second aspect, a HARQ ACK feedback method is provided, including:
receiving, by a network-side device, a HARQ ACK codebook sent by a terminal, where the HARQ ACK codebook includes HARQ ACK bits corresponding to PDSCHs scheduled by first DCI, and each first DCI is used for scheduling PDSCHs of a plurality of cells.

According to a third aspect, a HARQ ACK feedback apparatus is provided, including:

a determining module, configured to determine a HARQ ACK bit corresponding to a PDSCH scheduled by each first DCI of at least one first DCI, where each first DCI is used for scheduling PDSCHs of a plurality of cells; and

a constructing module, configured to construct a HARQ ACK codebook based on the HARQ ACK bits.

According to a fourth aspect, a HARQ ACK feedback apparatus is provided, including:
a receiving module, configured to receive a HARQ ACK codebook sent by a terminal, where the HARQ ACK codebook includes HARQ ACK bits corresponding to PDSCHs scheduled by first DCI, and each first DCI is used for scheduling PDSCHs of a plurality of cells.

According to a fifth aspect, a terminal is provided, where the terminal includes a processor and a memory, and a program or instructions capable of running on the processor are stored in the memory. When the program or the instructions are executed by the processor, the steps of the method according to the first aspect are implemented.

According to a sixth aspect, a terminal is provided, including a processor and a communication interface, where the processor is configured to determine a HARQ ACK bit corresponding to a PDSCH scheduled by each first DCI of at least one first DCI, where each first DCI is used for scheduling PDSCHs of a plurality of cells; and construct a HARQ ACK codebook based on the HARQ ACK bits.

According to a seventh aspect, a network-side device is provided, where the network-side device includes a processor and a memory, and a program or instructions capable of running on the processor are stored in the memory. When the program or the instructions are executed by the processor, the steps of the method according to the second aspect are implemented.

According to an eighth aspect, a network-side device is provided, including a processor and a communication interface, where the communication interface is configured to receive a HARQ ACK codebook sent by a terminal, where the HARQ ACK codebook includes HARQ ACK bits corresponding to PDSCHs scheduled by first DCI, and each first DCI is used for scheduling PDSCHs of a plurality of cells.

According to a ninth aspect, a communication system is provided, including: a terminal and a network-side device, where the terminal may be configured to perform the steps of the method according to the first aspect, and the network-side device may be configured to perform the steps of the method according to the second aspect.

According to a tenth aspect, a readable storage medium is provided, where a program or instructions are stored in the readable storage medium, and when the program or the instructions are executed by a processor, the steps of the method according to the first aspect are implemented, or the steps of the method according to the second aspect are implemented.

According to an eleventh aspect, a chip is provided, where the chip includes a processor and a communication interface, the communication interface is coupled to the processor, and the processor is configured to run a program or instructions to implement the method according to the first aspect or implement the method according to the second aspect.

According to a twelfth aspect, a computer program/program product is provided, where the computer program/-program product is stored in a non-transitory storage medium, and the computer program/program product is executed by at least one processor to implement the steps of the method according to the first aspect or the second aspect.

In the embodiments of this application, for a case that one DCI schedules PDSCHs of a plurality of cells, a HARQ ACK bit feedback mode is clarified, so that consistent understanding is achieved between the terminal and the network side.

## BRIEF DESCRIPTION OF DRAWINGS

FIG. 1 is a block diagram of a wireless communication system to which the embodiments of this application are applicable;
FIG. 2 is an example diagram of a generation mode of a HARQ ACK dynamic codebook;
FIG. 3 is a first schematic flowchart of a HARQ ACK feedback method according to an embodiment of this application;
FIG. 4 is a second schematic flowchart of a HARQ ACK feedback method according to an embodiment of this application;
FIG. 5 is a first schematic structural diagram of a HARQ ACK feedback apparatus according to an embodiment of this application;
FIG. 6 is a second schematic structural diagram of a HARQ ACK feedback apparatus according to an embodiment of this application;
FIG. 7 is a schematic structural diagram of a communication device according to an embodiment of this application;
FIG. 8 is a schematic structural diagram of hardware of a terminal according to an embodiment of this application; and
FIG. 9 is a schematic structural diagram of hardware of a network-side device according to an embodiment of this application.

## DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

In the specification and claims of this application, the terms such as "first" and "second" are intended to distinguish between similar objects but do not necessarily indicate a specific order or sequence. It should be understood that the data used in this way is interchangeable in appropriate circumstances so that the embodiments of this application can be implemented in other orders than the order illustrated or described herein, and "first" and "second" are usually for distinguishing same-type objects but not limiting the number of objects, for example, there may be one or more first objects. In addition, "and/or" in this specification and claims indicates at least one of connected objects, and the symbol "/" generally indicates that the associated objects are in an "or" relationship.

It should be noted that techniques described in the embodiments of this application are not limited to a long term evolution (Long Term Evolution, LTE) or LTE-advanced (LTE-Advanced, LTE-A) system, and may also be applied to various wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6$^{th}$ Generation, 6G) communication system.

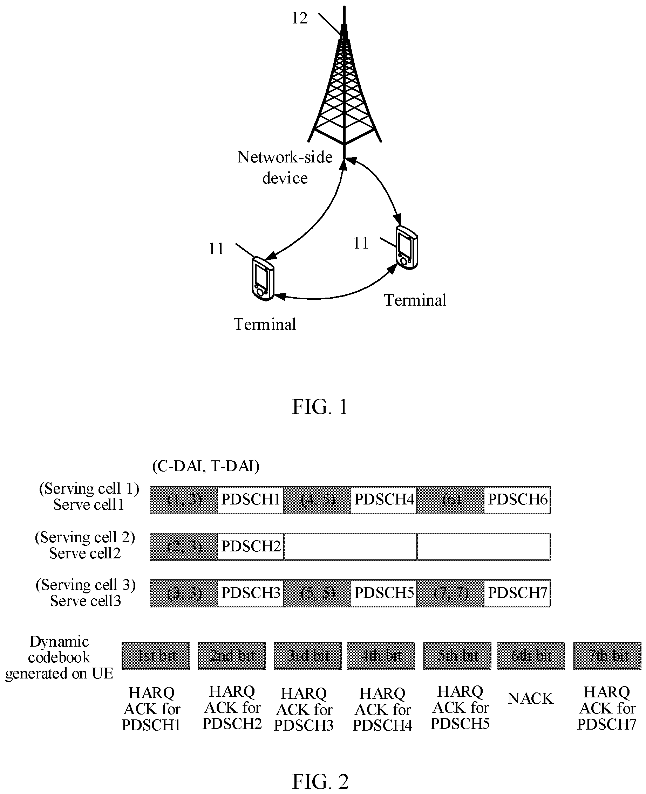

FIG. 1 is a block diagram of a wireless communication system to which the embodiments of this application are applicable. The wireless communication system includes a terminal 11 and a network-side device 12. The terminal 11 may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home device (a home device with wireless communication function, such as a refrigerator, a television, a washing machine, or a furniture), a game console, a personal computer (personal computer, PC), a teller machine, a self-service machine, or the like. The wearable device includes: a smart watch, a wrist band, smart earphones, smart glasses, smart jewelry (smart bracelet, smart wristband, smart ring, smart necklace, smart anklet, smart ankle bracelet, or the like), smart wristband, smart clothing, game console, and the like. It should be noted that a specific type of the terminal 11 is not limited in the embodiments of this application. The network-side device 12 may include an access network device or a core network device, where the access network device may also be referred to as a radio access network device, a radio access network (Radio Access Network, RAN), a radio access network function, or a radio access network unit. The access network device may include a base station, a wireless local area network (Wireless Local Area Network, WLAN) access point, a wireless fidelity Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited.

With reference to the accompanying drawings, the following describes in detail, by using some embodiments and application scenarios thereof, a HARQ ACK feedback method and apparatus, a terminal, and a network-side device provided in the embodiments of this application.

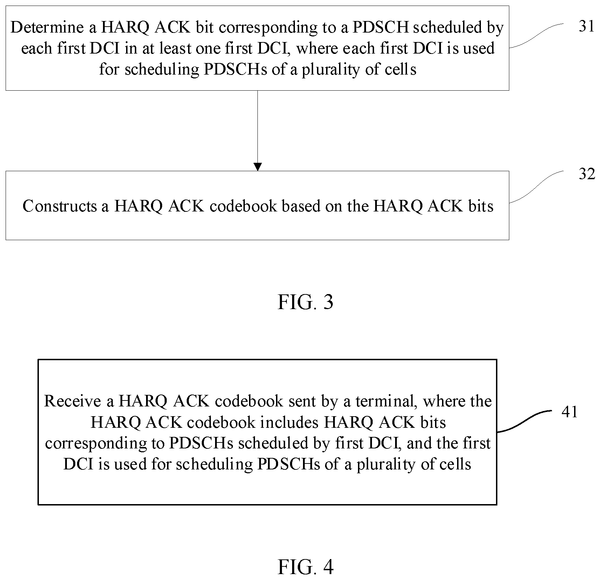

Referring to FIG. 3, an embodiment of this application provides a HARQ ACK feedback method, including the following steps.

Step 31: A terminal determines a HARQ ACK bit corresponding to a PDSCH scheduled by each first DCI of at least one first DCI, where each first DCI is used for scheduling PDSCHs of a plurality of cells.

The first DCI may also be referred to multi-cell DCI or mc DCI.

In this embodiment of this application, a PDSCH scheduled by the first DCI may also be described as a scheduling cell scheduled by the first DCI, or a PDSCH corresponding to the scheduling cell scheduled by the first DCI.

In this embodiment of this application, the first DCI may be DCI dedicated to scheduling PDSCHs of a plurality of cells, or may be multiplexed with other existing DCIs.

Step 32: The terminal constructs a HARQ ACK codebook based on the HARQ ACK bits.

During organization of a HARQ ACK bit that needs to be reported at a specific feedback moment, UE determines a correspondence between each PDSCH transmission and a specific bit or some bits in the organized HARQ ACK bits according to a preset rule and based on a scheduling status of single-/multi-carrier PDSCH transmissions for which HARQ ACKs need to be reported at the feedback moment, and such operation is referred to as HARQ ACK codebook (Codebook) construction. In a case that release of SPS PDSCH is indicated by DCI, the UE also needs to confirm its reception by using a HARQ ACK bit to ensure that both sides have consistent understanding on whether SPS PDSCH is in an active state.

In the embodiment of this application, for a case that one DCI schedules PDSCHs of a plurality of cells, a HARQ ACK bit feedback mode is clarified, so that consistent understanding is achieved between the terminal and the network side.

A HARQ ACK codebook includes a semi-static codebook (type -1(Type-1)) and a dynamic codebook (type -2(Type-2)). The former is feedback performed for all possible DCI indications and PDSCH transmissions, mainly to ensure transmission reliability, featuring relatively large overheads; and the latter is feedback performed for only actual DCI indications and PDSCH transmissions, featuring relatively small overheads, and transmission reliability may be affected when DCI missing detection commonly occurs.

For the dynamic codebook, HARQ ACK bits are reserved for each actually used downlink assignment index (Downlink Assignment Index, DAI) value through DAI counting for actually scheduled PDSCH transmissions/SPS PDSCH release indications. If the UE infers, based on other DAIs detected, that PDSCH assignment indications or semi-persistent scheduling (Semi-Persistent Scheduling, SPS) PDSCH release indications corresponding to some DAIs have not been received, corresponding HARQ ACK bits are set to negative acknowledgement (Negative Acknowledgment, NACK); otherwise, a corresponding HARQ ACK bit is set based on a decoding result of a PDSCH transmission corresponding to each PDSCH assignment indication, and a corresponding HARQ ACK bit of a detected SPS PDSCH release indication is set to ACK.

When the UE is only configured with a single serving cell, the DAI is counted only for a single carrier sequentially according to a time sequence indicated by DCI, which can be referred to as DAI (counter DAI, C-DAI for short). When the UE is configured with a plurality of serving cells, to further increase the reliability, total DAI (total DAI, T-DAI for short) is newly introduced to indicate the number of all DCI indications received up to a current time domain detection position, including all DCI indications received at the current time domain detection position on each serving cell; in this way, a value of T-DAI may be updated only when the time domain detection position changes. The combination of T-DAI and C-DAI can effectively avoid a case that the UE and the base station (gNB) have different understanding on transmission of an DCI indication when an DCI indication on one or some serving cells in a specific time domain detection position is lost (as long as not all DCI indications on all service cells are lost).

As shown in FIG. 2, FIG. 2 is an example diagram of a manner of generating a HARQ ACK dynamic codebook. At the 1st PDCCH monitoring occasion, C-DAIs in serving cells (serving cell) 1, 2, and 3 are 1, 2, and 3, respectively, and T-DAI values thereof are all 3. In FIG. 2, no DCI for scheduling PDSCH6 is detected; therefore, during generating of the dynamic codebook, the 6th position is filled with NACK.

The HARQ ACK codebook in the embodiments of this application may be a HARQ ACK dynamic codebook.

In this embodiment of this application, optionally, each cell in the plurality of cells corresponds to at least one PDSCH.

The following describes a method for calculating the number of HARQ ACK bits corresponding to a PDSCH scheduled by first DCI.

Embodiment 1:

In some embodiments of this application, optionally, the determining, by a terminal, a HARQ ACK bit corresponding to a PDSCH scheduled by each first DCI of at least one first DCI includes:

Step 311: For the first quantity of scheduling cells, the terminal monitors first DCI in each scheduling cell at each PDCCH monitoring occasion; where the scheduling cell is a cell configured to transmit first DCI or a cell configured to schedule a plurality of other cells.

Step 312: The terminal generates a second quantity of HARQ ACK bits for each scheduling cell according to the detected first DCI of the scheduling cell.

That is, a HARQ ACK bit length for each scheduling cell is the same, being the second quantity.

In some embodiments of this application, optionally, the second quantity is a maximum value of first HARQ ACK bit quantities for scheduling cells in the first quantity of scheduling cells, and the first HARQ ACK bit quantity is related to at least one of the following information:

1) the maximum number of codewords that is configured for a scheduled cell scheduled by the first DCI of the scheduling cell; and
2) the maximum number of PDSCHs allowed to be scheduled by the first DCI of the scheduling cell, or the maximum number of scheduled cells allowed to be scheduled by the first DCI of the scheduling cell, or a preset quantity of PDSCHs, or a preset quantity of scheduled cells.

In this embodiment of this application, optionally, the first HARQ ACK bit quantity is calculated by using the following formula:

$$N_{TB,c}^{DL,multi} \cdot N_{PDSCH,c}^{max}$$

or

$$N_{TB\,,\,c}^{DL\,,\,multi} \cdot N_{PDSCH\,,\,c}^{max} *a+b$$

where $N_{TB\,,\,c}^{DL\,,\,multi}$ is the maximum number of codewords that is configured for a scheduled cell scheduled by first DCI of a scheduling cell c, and the scheduling cell c is any one scheduling cell in the first quantity of scheduling cells;

$N_{PDSCH\,,\,c}^{max}$ is the maximum number of PDSCHs allowed to be scheduled PDSCH , c by the first DCI of the scheduling cell c, or the maximum number of scheduled cells allowed to be scheduled by the first DCI of the scheduling cell c, or a preset quantity of PDSCHs, or a preset quantity of scheduled cells; and
a and b are preset values.

In this embodiment of this application, a and b may be integers or decimals, and in one case, a may be 1 and b may be 0.

In this embodiment of this application, optionally, a joint time domain resource allocation (Time Domain Resource Allocation, TDRA) table configured for the scheduling cell indicates time domain resources of a scheduled cell.

In this embodiment of this application, optionally, the maximum number of scheduled cells is configured for the scheduling cell.

In this embodiment of this application, optionally, a scheduled cell list is configured for the scheduling cell.

In this embodiment of this application, optionally, the generating, by the terminal, a second quantity of HARQ ACK bits for each scheduling cell according to the detected first DCI of the scheduling cell includes:

if the first HARQ ACK bit quantity for the scheduling cell is less than the second quantity, filling, by the terminal, a NACK bit into a first difference value of bits behind a HARQ ACK bit of the scheduling cell, where the first difference value is a difference value between the second quantity and the first HARQ ACK bit quantity.

that is, the terminal fills a NACK bit into the last $N_{HARQ-ACK}^{max} - N_{TB\,,\,c}^{DL\,,\,multi} \cdot N_{PDSCH\,,\,c}^{max}$ bits in the HARQ ACK bits of the scheduling cell,

and the first $N_{TB\,,\,c}^{DL\,,\,multi} \cdot N_{PDSCH\,,\,c}^{max}$ bits are set based on a transport block (Transport TB , c PDSCH , c Block, TB) decoding status corresponding to an actually received transport block.

In this embodiment of this application, optionally, in a case that at least one of the scheduled cells is configured with dual codewords and at least one of the scheduled cells is configured with a single codeword, the determining, by a terminal, a HARQ ACK bit corresponding to a PDSCH scheduled by each first DCI of at least one first DCI includes:

generating HARQ ACK bits of two transport blocks for the scheduled cell configured with the single codeword, where a HARQ ACK bit of the 2nd transport block is located after a HARQ ACK bit of the 1st transport block, and is an ACK bit or a NACK bit. In this embodiment of this application, optionally, the HARQ ACK bit of the 2nd transport block is NACK in a case that space division multiplexing feedback is not configured, and the HARQ ACK bit of the 2nd transport block is ACK in a case that the space division multiplexing feedback is configured;
or
generating only a HARQ ACK bit of the 1st transport block for the scheduled cell configured with the single codeword.

In some embodiments of this application, optionally, the second quantity is a maximum value of second HARQ ACK bit quantities for scheduling cells in the first quantity of scheduling cells, and the second HARQ ACK bit quantity is related to at least one of the following information:

1) the maximum number of codewords that is configured for a scheduled cell scheduled by the first DCI of the scheduling cell; and
2) a maximum value of third HARQ ACK bit quantities corresponding to a cell combination allowed to be scheduled by the first DCI of the scheduling cell, where the third HARQ ACK bit quantity is a sum of the maximum number of codewords of the cell combination allowed to be scheduled by the first DCI.

For example, when a combination of scheduled cells allowed to be scheduled by the scheduling cell c is {cell 1, cell 2} and {cell 1, cell3}, a calculation method of the third HARQ ACK bit quantity of the scheduling cell c is as follows:

$$\sum N_{TB,c}^{DL,multi} = \max\{(N_{TB}^{cell1} + N_{TB}^{cell2}), (N_{TB}^{cell1} + N_{TB}^{cell3})\}$$

, where $N_{TB}^{cell1}$, $N_{TB}^{cell2}$, and $N_{TB}^{cell3}$ each are the maximum number of codewords for cells combinations allowed to be scheduled by the first DCI.

In this embodiment of this application, optionally, the generating, by the terminal, a second quantity of HARQ ACK bits for each scheduling cell according to the detected first DCI of the scheduling cell includes:
if the second HARQ ACK bit quantity for the scheduling cell is less than the second quantity, filling, by the terminal, a NACK bit into a first difference value of bits behind a HARQ ACK bit of the scheduling cell, where the first difference value is a difference value between the second quantity and the second HARQ ACK bit quantity. That is, if the second HARQ ACK bit quantity for the scheduling cell c is $\max\left(\sum N_{TB,c}^{DL,multi}\right) < N_{HARQ-ACK}^{max}$, the terminal fills NACK into

$N_{HARQ-ACK}^{max} - \max\left(\sum N_{TB,c}^{DL,multi}\right)$ bits finally generated for the scheduling cell c.

In this embodiment of this application, optionally, in a case that at least one of the scheduled cells is configured with dual codewords and at least one of the scheduled cells is configured with a single codeword, the determining, by a terminal, a HARQ ACK bit corresponding to a PDSCH scheduled by each first DCI of at least one first DCI includes:
feeding back only a HARQ ACK bit of the 1st transport block for the scheduled cell configured with the single codeword.

In this embodiment of this application, optionally, the constructing, by the terminal, a HARQ ACK codebook based on the HARQ ACK bits includes:
constructing, by the terminal, the HARQ ACK codebook based on an index order of the first quantity of scheduling cells and HARQ ACK bits of the first quantity of the scheduling cells.

In some embodiments of this application, optionally, one HARQ ACK codebook may be constructed using only HARQ ACKs of the PDSCHs scheduled by the first DCI. In some other embodiments of this application, the HARQ ACK codebook may alternatively include a plurality of sub-codebooks, where the HARQ ACKs of the PDSCHs scheduled by the first DCI are used as one of the sub-codebooks.

In this embodiment of this application, optionally, the HARQ ACK codebook includes a first sub-codebook and a second sub-codebook, a HARQ ACK of a PDSCH scheduled by fourth DCI is in the first sub-codebook, and a HARQ ACK of a PDSCH scheduled by the first DCI is in the second sub-codebook, where the fourth DCI is used for scheduling one PDSCH. The fourth DCI may also be referred to as sc-DCI (Single DCI schedule single PDSCH).

In this embodiment of this application, optionally, the C-DAI and/or T-DAI counting for the first sub-codebook and the second sub-codebook is performed separately. Separate DAI counting can be understood as that different sub-codebooks have their own corresponding DAIs, and the DAI is carried in a respective corresponding DCI.

In this embodiment of this application, optionally, the second sub-codebook is cascaded before or after the first sub-codebook.

In this embodiment of this application, optionally, the following schedulings are not allowed to be simultaneously configured for scheduling cells in a same serving cell group: scheduling for scheduling PDSCHs of a plurality of cells by one DCI, scheduling for scheduling a plurality of PDSCHs of one cell by one DCI, and scheduling for scheduling CBG-based PDSCHs by one DCI;

It can alternatively be described that the first DCI, the second DCI, and the third DCI cannot be simultaneously configured for the scheduling cells in the same serving cell group.

The second DCI is used for scheduling a plurality of PDSCH of one cell; and the second DCI may also be referred to as multi-DCI. The third DCI is used for scheduling CBG-based PDSCHs. The third DCI may also be referred to as CBG-based DCI. For example, if the first DCI is configured for cell 1, the second DCI and the third DCI cannot be configured for cell 2 and cell 3 that belong to a same serving cell group as cell 1.

In this embodiment of this application, optionally, the serving cell group is one PUCCH cell group, and all cells in the PUCCH cell group uses one PUCCH for feeding back a HARQ ACK codebook;
or

the serving cell group is one master cell group (Master Cell Group, MCG) or one secondary cell group (Secondary Cell Group, SCG);
or

the serving cell group is a cell identity (Identity, ID) list, and the cell ID list is a list including IDs of some cells in a master cell group or a secondary cell group.

For example, cell 1 may be configured as a scheduling cell for which the first DCI can be configured, cells 2 and 3 may be configured as scheduled cells to be scheduled by the first DCI of cell 1, and cells 1, 2, and 3 belong to a same serving cell group.

The advantage of Embodiment 1 lies in relatively small HARQ ACK feedback overheads and simple implementation.

Embodiment 2:

In this embodiment of this application, optionally, the determining, by a terminal, a HARQ ACK bit corresponding to a PDSCH scheduled by each first DCI of at least one first DCI includes:

for a third quantity of scheduling cells, monitoring, by the terminal, first DCI in each scheduling cell at each PDCCH monitoring occasion; and
generating, by the terminal, a fourth quantity of HARQ ACK bits for each scheduling cell according to the detected first DCI of the scheduling cell; where
the scheduling cell is a cell configured to transmit the first DCI and having at least one scheduled cell being configured with CBG in scheduled cells scheduled by the first DCI; and
the fourth quantity is a maximum value of first HARQ ACK bit quantities for scheduling cells in the third quantity of scheduling cells.

That is, HARQ ACK bits of each scheduling cell in the third quantity of scheduling cells are provided in the fourth quantity.

In some embodiments of this application, optionally, the first HARQ ACK bit quantity is related to at least one of the following information:

the maximum number of code block group (Code Block Group, CBG)s configured for a cell configured with CBG;
the maximum number of codewords for the cell configured with CBG; and
the maximum number of PDSCHs allowed to be scheduled by the first DCI of the scheduling cell, or the maximum number of scheduled cells allowed to be scheduled by the first DCI of the scheduling cell, or a preset quantity of PDSCHs, or a preset quantity of scheduled cells.

In this embodiment of this application, optionally, the first HARQ ACK bit quantity is calculated by using the following formula:

$$N_{HARQ-ACK,\,max}^{CBG/TB,\,max} \cdot N_{PDSCH,\,c}^{max}$$

or

$$N_{HARQ-ACK,\,max}^{CBG/TB,\,max} \cdot N_{PDSCH,\,c}^{max} * c + d$$

where $N_{HARQ-ACK,\,max}^{CBG/TB,\,max}$ is a maximum value of $N_{TB,\,m}^{DL} \cdot N_{HARQ-ACK,\,m}^{CBG/TB,\,max}$ for the cell configured with CBG;

$N_{TB,\,m}^{DL}$ is the maximum number of codewords for a cell m configured with CBG; where the cell m is any one cell in cells configured with CBG, and the cell configured with CBG include a scheduling cell and a scheduled cell;

$N_{HARQ-ACK,\,m}^{CBG/TB,\,max}$ is the maximum number of CBGs configured for the cell m configured with CBG;

$N_{PDSCH,c}^{max}$ is the maximum number of PDSCHs allowed to be scheduled by first DCI of a scheduling cell c, or the maximum number of scheduled cells allowed to be scheduled by the first DCI of the scheduling cell c, or a preset quantity of PDSCHs, or a preset quantity of scheduled cells, where the scheduling cell c is any one scheduling cell in the third quantity of scheduling cells; and
c and d are preset values.

In some other embodiments of this application, optionally, the first HARQ ACK bit quantity is related to at least one of the following information:

the maximum number of CBGs configured for a scheduled cell that is scheduled by the first DCI and configured with CBG;
the maximum number of codewords for the scheduled cell that is scheduled by the first DCI and configured with CBG; and
the maximum number of PDSCHs allowed to be scheduled by the first DCI of the scheduling cell, or the maximum number of scheduled cells allowed to be scheduled by the first DCI of the scheduling cell, or a preset quantity of PDSCHs, or a preset quantity of scheduled cells.

In this embodiment of this application, optionally, the first HARQ ACK bit quantity is calculated by using the following formula:

$$N_{HARQ-ACK,max}^{CBG/TB,max} \cdot N_{PDSCH,c}^{max}$$

or

$$N_{HARQ-ACK,max}^{CBG/TB,max} \cdot N_{PDSCH,c}^{max} * e + f$$

where $N_{HARQ-ACK,max}^{CBG/TB,max}$ is a maximum value of $N_{TB,n}^{DL} \cdot N_{HARQ-ACK,n}^{CBG/TB,max}$ for the scheduled cell that is scheduled by the first DCI and configured with CBG;

$N_{TB,n}^{DL}$ is the maximum number of codewords for a scheduled cell n scheduled by the first DCI and configured with CBG, where the scheduled cell n is any one scheduled cell in scheduled cells scheduled by the first DCI and configured with CBG;

$N_{HARQ-ACK,n}^{CBG/TB,max}$ is the maximum number of CBGs configured for the scheduled cell n that is scheduled by the first DCI and configured with CBG;

$N_{PDSCH,c}^{max}$ is the maximum number of PDSCHs allowed to be scheduled by first DCI of a scheduling cell c, or the maximum number of scheduled cells allowed to be scheduled by the first DCI of the scheduling cell, or a preset quantity of PDSCHs, or a preset quantity of scheduled cells, where the scheduling cell c is any one scheduling cell in the third quantity of scheduling cells; and
e and f are preset values.

In this embodiment of this application, optionally, the determining, by a terminal, a HARQ ACK bit corresponding to a PDSCH scheduled by each first DCI of at least one first DCI includes: if none of the scheduled cells scheduled by the first DCI are configured with CBG, generating, by the terminal, a second quantity of HARQ ACK bits for a PDSCH scheduled by the detected first DCI. That is, the HARQ ACK bits are generated in the manner of Embodiment 1. Refer to Embodiment 1 for specific implementation. Details are not repeated here.
In this embodiment of this application, optionally, the determining, by a terminal, a HARQ ACK bit corresponding to a PDSCH scheduled by each first DCI of at least one first DCI includes:
performing, by the terminal, DAI counting separately for at least part of the following DCIs, and separately generating a corresponding sub-codebook:

fourth DCI not for scheduling a scheduled cell configured with CBG, where the fourth DCI is used for scheduling one PDSCH;
fourth DCI for scheduling a scheduled cell configured with CBG;
first DCI not for scheduling a scheduled cell configured with CBG; and
first DCI for scheduling a scheduled cell configured with CBG.

In this embodiment of this application, optionally, the terminal does not expect that the first DCI schedules a cell configured with CBG. In this case, the determining, by a terminal, a HARQ ACK bit corresponding to a PDSCH scheduled by each first DCI of at least one first DCI includes:
performing, by the terminal, DAI counting separately for the following DCIs, and separately generating three sub-codebooks:

fourth DCI not for scheduling a scheduled cell configured with CBG, where the fourth DCI is used for scheduling one PDSCH;
fourth DCI for scheduling a scheduled cell configured with CBG; and
first DCI not for scheduling a scheduled cell configured with CBG;
or
performing, by the terminal, DAI counting for the fourth DCI for scheduling a scheduled cell configured with CBG and the first DCI not for scheduling a scheduled cell configured with CBG, and performing DAI counting for the fourth DCI not for scheduling a scheduled cell configured with CBG, to generate two sub-codebooks, where
HARQ ACKs for PDSCHs scheduled by the fourth DCI not for scheduling a scheduled cell configured with CBG are in one sub-codebook; and HARQ ACKs for PDSCHs scheduled by the first DCI for scheduling a scheduled cell configured with CBG and those scheduled by the first DCI not for scheduling a scheduled cell configured with CBG are in one sub-codebook.

In this embodiment of this application, optionally, the maximum number of CBGs is equal to the maximum number of PDSCHs scheduled by one first DCI.

In this embodiment of this application, optionally, the following schedulings are allowed to be simultaneously configured for scheduling cells in a same serving cell group: scheduling for scheduling PDSCHs of a plurality of cells by one DCI, and scheduling for scheduling CBG-based PDSCHs by one DCI.

It can alternatively be described that the first DCI and the third DCI can be simultaneously configured for the scheduling cells in the same serving cell group.

The third DCI is used for scheduling CBG-based PDSCHs. For example, the first DCI is configured for cell 1 in a serving cell group, and at the same time, the third DCI can be configured for at least one cell in other cells in the serving cell group.

In this embodiment of this application, optionally, the serving cell group is one PUCCH cell group, and all cells in the PUCCH cell group uses one PUCCH for feeding back a HARQ ACK codebook;
or

the serving cell group is one master cell group (MCG) or one secondary cell group (SCG);
or
the serving cell group is a cell ID list, and the cell ID list is a list including IDs of some cells in a master cell group or a secondary cell group.

In this embodiment of this application, the following schedulings can be simultaneously configured for the scheduling cells in the same serving cell group: scheduling for scheduling PDSCHs of a plurality of cells by one DCI, and scheduling for scheduling CBG-based PDSCHs by one DCI, that is, the first DCI and the third DCI can be simultaneously configured for the scheduling cells in the same serving cell group, featuring small scheduling restriction.

Embodiment 3

In this embodiment of this application, the following schedulings are allowed to be simultaneously configured for scheduling cells in a same serving cell group: scheduling for scheduling PDSCHs of a plurality of cells by one DCI, and scheduling for scheduling a plurality of PDSCHs of one cell by one DCI.

It can alternatively be described that the first DCI and the second DCI can be simultaneously configured for the scheduling cells in the same serving cell group.

The second DCI is used for scheduling a plurality of PDSCH in one cell, and the second DCI can also be referred to as multi-DCI. In this embodiment of this application, HARQ ACK bits can be generated in a manner of Embodiment 1, which is not repeated here. For specific implementation, refer to Embodiment 1.

In this embodiment of this application, optionally, the determining, by a terminal, a HARQ ACK bit corresponding to a PDSCH scheduled by each first DCI of at least one first DCI includes:

performing, by the terminal, C-DAI and/or T-DAI counting separately for the following DCIs, and separately generating three sub-codebooks:

fourth DCI, where the fourth DCI is used for scheduling one PDSCH;
second DCI, where the second DCI is used for scheduling a plurality of PDSCHs of one cell; and
the first DCI.

In this embodiment of this application, a sub-codebook corresponding to the HARQ ACK bits that are corresponding to the PDSCHs scheduled by the first DCI may be the 1st sub-codebook, the 2nd sub-codebook or the 3rd sub-codebook.

In this embodiment of this application, optionally, the determining, by a terminal, a HARQ ACK bit corresponding to a PDSCH scheduled by each first DCI of at least one first DCI includes:

performing, by the terminal, C-DAI and/or T-DAI counting for second DCI and the first DCI, and performing C-DAI and/or T-DAI counting for fourth DCI, to generate two sub-codebooks; where
HARQ ACKs for PDSCHs scheduled by the second DCI and the first DCI are in one sub-codebook, and HARQ ACKs for PDSCHs scheduled by the fourth DCI are in one sub-codebook, where the fourth DCI is used for scheduling one PDSCH.

In this embodiment of this application, optionally, in a case that two sub-codebooks are generated, the determining, by a terminal, a HARQ ACK bit corresponding to a PDSCH scheduled by each first DCI of at least one first DCI includes:

for the first quantity of scheduling cells, monitoring, by the terminal, first DCI in each scheduling cell at each PDCCH monitoring occasion; and
generating, by the terminal, a fifth quantity of HARQ ACK bits for each scheduling cell according to the detected first DCI of the scheduling cell; where
the scheduling cell is a cell configured to transmit first DCI or a cell configured to schedule a plurality of other cells; and
the fifth quantity is a maximum value of a first maximum value and a second maximum value, where the first maximum value is a maximum value of first HARQ ACK bit quantities for scheduling cells configured with the first DCI, and the second maximum value is a maximum value of third HARQ ACK bit quantities for scheduling cells configured with second DCI.

In this embodiment of this application, optionally, the maximum number of PDSCHs allowed to be scheduled by the first DCI is the same as that allowed to be scheduled by the second DCI.

In this embodiment of this application, optionally, the first DCI and the second DCI need not to be a same DCI.

In this embodiment of this application, optionally, the following scheduling is allowed to be configured simultaneously for scheduling cells in a same serving cell group: scheduling for scheduling PDSCHs of a plurality of cells by one DCI, and scheduling for scheduling a plurality of PDSCHs of one cell by one DCI; where the second DCI is used for scheduling a plurality of PDSCHs of one cell.

In this embodiment of this application, optionally, the serving cell group is one PUCCH cell group, and all cells in the PUCCH cell group uses one PUCCH for feeding back a HARQ ACK codebook;

or

the serving cell group is one master cell group (MCG) or one secondary cell group (SCG);
or
the serving cell group is a cell ID list, and the cell ID list is a list including IDs of some cells in a master cell group or a secondary cell group.

In this embodiment of this application, the following schedulings can be simultaneously configured for the scheduling cells in the same serving cell group: scheduling for scheduling PDSCHs of a plurality of cells by one DCI, and scheduling for scheduling a plurality of PDSCHs of one cell by one DCI, that is, the first DCI and the second DCI can be simultaneously configured for the scheduling cells in the same serving cell group, featuring small scheduling restriction.

In the foregoing embodiments of this application, optionally, a T-DAI is present in the first DCI is specified by a protocol or configured by a higher layer. For example, in a case that scheduling by the first DCI meets the following two conditions, T-DAI may not be required: there is only one first DCI at a PDCCH occasion where the first DCI is located, and the number of PDSCHs scheduled by the first DCI is fixed (which is specified by the protocol or configured by the higher layer).

In the foregoing embodiments of this application, optionally, the method further includes:

in a case that the first DCI indicates a codeword of a scheduled cell being 2 and a maximum codeword of the scheduled cell configured by a higher layer is 1, transmitting, by the terminal, one transport block to the scheduled cell based on information related to the 1st transport block in the first DCI, while ignoring information related to the 2nd transport block.

In this embodiment of this application, optionally, the determining, by a terminal, a HARQ ACK bit corresponding to a PDSCH scheduled by each first DCI of at least one first DCI includes:

if one cell is actually scheduled by the first DCI, or a cell actually scheduled by the first DCI is bound to feedback of 1 bit for a same transport block, HARQ ACKs for PDSCHs scheduled by the first DCI and fourth DCI are in a same sub-codebook, where the fourth DCI is used for scheduling one PDSCH.

In this embodiment of this application, optionally, the following schedulings are not allowed to be simultaneously configured for scheduling cells in a same serving cell group: scheduling for scheduling PDSCHs of a plurality of cells by one DCI, scheduling for scheduling a plurality of PDSCHs of one cell by one DCI, and scheduling for scheduling CBG-based PDSCHs by one DCI;

or

the following schedulings are allowed to be simultaneously configured for scheduling cells in a same serving cell group: scheduling for scheduling PDSCHs of a plurality of cells by one DCI, and scheduling for scheduling a plurality of PDSCHs of one cell by one DCI;

or

the following schedulings are allowed to be simultaneously configured for scheduling cells in a same serving cell group: scheduling for scheduling PDSCHs of a plurality of cells by one DCI, and scheduling for scheduling CBG-based PDSCHs by one DCI.

In this embodiment of this application, a feedback rule of a HARQ ACK dynamic codebook for the first DCI is defined, so that consistent understanding can be achieved between the terminal and the network side.

Referring to FIG. 4, an embodiment of this application further provides a HARQ ACK feedback method, including the following steps.

Step 41: A network-side device receives a HARQ ACK codebook sent by a terminal, where the HARQ ACK codebook includes HARQ ACK bits corresponding to PDSCHs scheduled by first DCI, and each first DCI is used for scheduling PDSCHs of a plurality of cells.

In this embodiment of this application, for a case that one DCI schedules PDSCHs of a plurality of cells, a HARQ ACK bit feedback mode is clarified, so that consistent understanding is achieved between the terminal and the network side.

In this embodiment of this application, optionally, the number of HARQ ACK bits corresponding to PDSCHs scheduled by the first DCI is a second quantity; and

the second quantity is a maximum value of first HARQ ACK bit quantities for scheduling cells in a first quantity of scheduling cells; where

the first HARQ ACK bit quantity is related to at least one of the following information:

the maximum number of codewords that is configured for a scheduled cell scheduled by the first DCI of the scheduling cell; and

the maximum number of PDSCHs allowed to be scheduled by the first DCI of the scheduling cell, or the maximum number of scheduled cells allowed to be scheduled by the first DCI of the scheduling cell, or a preset quantity of PDSCHs, or a preset quantity of scheduled cells;

or

the second quantity is a maximum value of second HARQ ACK bit quantities for scheduling cells in the first quantity of scheduling cells; where

the second HARQ ACK bit quantity is related to at least one of the following information:

the maximum number of codewords that is configured for a scheduled cell scheduled by the first DCI of the scheduling cell; and

a maximum value of third HARQ ACK bit quantities corresponding to a cell combination allowed to be scheduled by the first DCI of the scheduling cell, where the third HARQ ACK bit quantity is a sum of the maximum number of codewords of the cell combination allowed to be scheduled by the first DCI.

In this embodiment of this application, optionally, the HARQ ACK codebook includes a first sub-codebook and a second sub-codebook, a HARQ ACK of a PDSCH scheduled by fourth DCI is in the first sub-codebook, and a HARQ ACK of a PDSCH scheduled by the first DCI is in the second sub-codebook, where the fourth DCI is used for scheduling one PDSCH.

In this embodiment of this application, optionally, the following schedulings are not allowed to be simultaneously configured for scheduling cells in a same serving cell group: scheduling for scheduling PDSCHs of a plurality of cells by one DCI, scheduling for scheduling a plurality of PDSCHs of one cell by one DCI, and scheduling for scheduling CBG-based PDSCHs by one DCI;

or

the following schedulings are allowed to be simultaneously configured for scheduling cells in a same serving cell group: scheduling for scheduling PDSCHs of a plurality of cells by one DCI, and scheduling for scheduling a plurality of PDSCHs of one cell by one DCI.

In this embodiment of this application, optionally, the number of HARQ ACK bits corresponding to PDSCHs scheduled by the first DCI is a fourth quantity;

the fourth quantity is a maximum value of first HARQ ACK bit quantities for scheduling cells in a third quantity of scheduling cells; and
the first HARQ ACK bit quantity is related to at least one of the following information:

the maximum number of CBGs configured for a cell configured with CBG;
the maximum number of codewords for a scheduled cell configured with CBG; and
the maximum number of PDSCHs allowed to be scheduled by the first DCI of the scheduling cell, or the maximum number of scheduled cells allowed to be scheduled by the first DCI of the scheduling cell, or a preset quantity of PDSCHs, or a preset quantity of scheduled cells;

or

the first HARQ ACK bit quantity is related to at least one of the following information:

the maximum number of CBGs configured for a scheduled cell that is scheduled by the first DCI and configured with CBG;
the maximum number of codewords for the scheduled cell that is scheduled by the first DCI and configured with CBG; and
the maximum number of PDSCHs allowed to be scheduled by the first DCI of the scheduling cell, or the maximum number of scheduled cells allowed to be scheduled by the first DCI of the scheduling cell, or a preset quantity of PDSCHs, or a preset quantity of scheduled cells.

In this embodiment of this application, optionally, the following schedulings are allowed to be simultaneously configured for scheduling cells in a same serving cell group: scheduling for scheduling PDSCHs of a plurality of cells by one DCI, and scheduling for scheduling CBG-based PDSCHs by one DCI.

For the HARQ ACK feedback method provided in this embodiment of this application, the execution body may be a HARQ ACK feedback apparatus. In the embodiments of this application, the HARQ ACK feedback method being performed by the HARQ ACK feedback apparatus is used as an example to describe the HARQ ACK feedback apparatus provided in the embodiments of this application

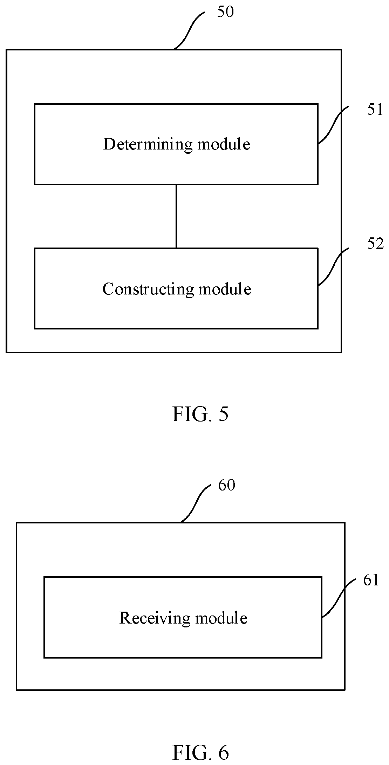

Referring to FIG. 5, an embodiment of this application further provides a HARQ ACK feedback apparatus 50, including:

a determining module 51, configured to determine a HARQ ACK bit corresponding to a PDSCH scheduled by each first DCI of at least one first DCI, where each first DCI is used for scheduling PDSCHs of a plurality of cells; and
a constructing module 52, configured to construct a HARQ ACK codebook based on the HARQ ACK bits.

In this embodiment of this application, for a case that one DCI schedules PDSCHs of a plurality of cells, a HARQ ACK bit feedback mode is clarified, so that consistent understanding is achieved between the terminal and the network side.

In this embodiment of this application, optionally, each cell in the plurality of cells corresponds to at least one PDSCH.

In this embodiment of this application, optionally, the determining module 51 is configured to: for a first quantity of scheduling cells, monitor first DCI in each scheduling cell at each PDCCH monitoring occasion; and generate a second quantity of HARQ ACK bits for each scheduling cell according to the detected first DCI of the scheduling cell; where the scheduling cell is a cell configured to transmit first DCI or a cell configured to schedule a plurality of other cells.

In this embodiment of this application, optionally, the second quantity is a maximum value of first HARQ ACK bit quantities for scheduling cells in the first quantity of scheduling cells, and the first HARQ ACK bit quantity is related to at least one of the following information:

the maximum number of codewords that is configured for a scheduled cell scheduled by the first DCI of the scheduling cell; and
the maximum number of PDSCHs allowed to be scheduled by the first DCI of the scheduling cell, or the maximum number of scheduled cells allowed to be scheduled by the first DCI of the scheduling cell, or a preset quantity of PDSCHs, or a preset quantity of scheduled cells.

In this embodiment of this application, optionally, the first HARQ ACK bit quantity is calculated by using the following formula:

$$N_{TB,c}^{DL,multi} \cdot N_{PDSCH,c}^{max}$$

or

$$N_{TB,c}^{DL,multi} \cdot N_{PDSCH,c}^{max} *a+b$$

where $N_{TB,c}^{DL,multi}$ is the maximum number of codewords that is configured for a scheduled cell scheduled by first DCI of a scheduling cell c, and the scheduling cell c is any one scheduling cell in the first quantity of scheduling cells;

$N_{PDSCH,c}^{max}$ is the maximum number of PDSCHs allowed to be scheduled by the first DCI of the scheduling cell c, or the maximum number of scheduled cells allowed to be scheduled by the first DCI of the scheduling cell c, or a preset quantity of PDSCHs, or a preset quantity of scheduled cells; and
a and b are preset values.

In this embodiment of this application, optionally, in a case that at least one of the scheduled cells is configured with dual codewords and at least one of the scheduled cells is configured with a single codeword, the determining module 51 is configured to generate HARQ ACK bits of two transport blocks for the scheduled cell configured with the single codeword, where a HARQ ACK bit of the 2nd transport block is located after a HARQ ACK bit of the 1st transport block, and is an ACK bit or a NACK bit; or
the determining module 51 is configured to generate only a HARQ ACK bit of the 1st transport block for the scheduled cell configured with the single codeword.

In this embodiment of this application, optionally, the HARQ ACK bit of the 2nd transport block is NACK in a case that space division multiplexing feedback is not configured, and the HARQ ACK bit of the 2nd transport block is ACK in a case that the space division multiplexing feedback is configured.

In this embodiment of this application, optionally, the second quantity is a maximum value of second HARQ ACK bit quantities for scheduling cells in the first quantity of scheduling cells, and the second HARQ ACK bit quantity is related to at least one of the following information:

the maximum number of codewords that is configured for a scheduled cell scheduled by the first DCI of the scheduling cell; and
a maximum value of third HARQ ACK bit quantities corresponding to a cell combination allowed to be scheduled by the first DCI of the scheduling cell, where the third HARQ ACK bit quantity is a sum of the maximum number of codewords of the cell combination allowed to be scheduled by the first DCI.

In this embodiment of this application, optionally, in a case that at least one scheduled cell is configured with dual codewords and at least one scheduled cell is configured with a single codeword, the determining module 51 is configured to feed back only a HARQ ACK bit of the 1st transport block for the scheduled cell configured with the single codeword.

In this embodiment of this application, optionally, the determining module 51 is configured to: if the first HARQ ACK bit quantity for the scheduling cell is less than the second quantity, fill a NACK bit into a first difference value of bits behind a HARQ ACK bit of the scheduling cell, where the first difference value is a difference value between the second quantity and the first HARQ ACK bit quantity.

In this embodiment of this application, optionally, the determining module 51 is configured to: if the second HARQ ACK bit quantity for the scheduling cell is less than the second quantity, fill, for the terminal, a NACK bit into a first difference value of bits behind a HARQ ACK bit of the scheduling cell, where the first difference value is a difference value between the second quantity and the second HARQ ACK bit quantity.

In this embodiment of this application, optionally, the constructing module 52 is configured to: construct the HARQ ACK codebook based on an index order of the first quantity of scheduling cells and HARQ ACK bits of the first quantity of the scheduling cells.

In this embodiment of this application, optionally, the HARQ ACK codebook includes a first sub-codebook and a second sub-codebook, a HARQ ACK of a PDSCH scheduled by fourth DCI is in the first sub-codebook, and a HARQ ACK of a PDSCH scheduled by the first DCI is in the second sub-codebook, where the fourth DCI is used for scheduling one PDSCH.

In this embodiment of this application, optionally, the C-DAI and/or T-DAI counting for the first sub-codebook and the second sub-codebook is performed separately.

In this embodiment of this application, optionally, the second sub-codebook is cascaded before or after the first sub-codebook.

In this embodiment of this application, optionally, the following schedulings are not allowed to be simultaneously configured for scheduling cells in a same serving cell group: scheduling for scheduling PDSCHs of a plurality of cells by one DCI, scheduling for scheduling a plurality of PDSCHs of one cell by one DCI, and scheduling for scheduling CBG-based PDSCHs by one DCI;

or

the following schedulings are allowed to be simultaneously configured for scheduling cells in a same serving cell group: scheduling for scheduling PDSCHs of a plurality of cells by one DCI, and scheduling for scheduling a plurality of PDSCHs of one cell by one DCI.

In this embodiment of this application, optionally, the determining module 51 is configured to: for a third quantity of scheduling cells, monitor first DCI in each scheduling cell at each PDCCH monitoring occasion; and generate a fourth quantity of HARQ ACK bits for each scheduling cell according to the detected first DCI of the scheduling cell; where

the scheduling cell is a cell configured to transmit the first DCI and having at least one scheduled cell being configured with CBG in scheduled cells scheduled by the first DCI; and

the fourth quantity is a maximum value of first HARQ ACK bit quantities for scheduling cells in the third quantity of scheduling cells.

In this embodiment of this application, optionally, the first HARQ ACK bit quantity is related to at least one of the following information:

the maximum number of CBGs configured for a cell configured with CBG;

the maximum number of codewords for the cell configured with CBG; and

the maximum number of PDSCHs allowed to be scheduled by the first DCI of the scheduling cell, or the maximum number of scheduled cells allowed to be scheduled by the first DCI of the scheduling cell, or a preset quantity of PDSCHs, or a preset quantity of scheduled cells.

In this embodiment of this application, optionally, the first HARQ ACK bit quantity is calculated by using the following formula:

$$N_{HARQ-ACK, max}^{CBG/TB, max} \cdot N_{PDSCH, c}^{max}$$

or

$$N_{HARQ-ACK,\ max}^{CBG/TB,\ max} \cdot N_{PDSCH,\ c}^{max} *c+d$$

where $N_{HARQ-ACK,\ max}^{CBG/TB,\ max}$ is a maximum value of $N_{TB,\ m}^{DL} \cdot N_{HARQ-ACK,\ m}^{CBG/TB,\ max}$ *for the* cell configured with CBG;

$N_{TB,\ m}^{DL}$ is the maximum number of codewords for a cell m configured with CBG; where the cell m is any one cell in cells configured with CBG;

$N_{HARQ-ACK,\ m}^{CBG/TB,\ max}$ is the maximum number of CBGs configured for the cell m configured with CBG;

$N_{PDSCH,\ c}^{max}$ is the maximum number of PDSCHs allowed to be scheduled by first DCI of a scheduling cell c, or the maximum number of scheduled cells allowed to be scheduled by the first DCI of the scheduling cell c, or a preset quantity of PDSCHs, or a preset quantity of scheduled cells, where the scheduling cell c is any one scheduling cell in the third quantity of scheduling cells; and

c and d are preset values.

In this embodiment of this application, optionally, the first HARQ ACK bit quantity is related to at least one of the following information:

the maximum number of CBGs configured for a scheduled cell that is scheduled by the first DCI and configured with CBG;
the maximum number of codewords for the scheduled cell that is scheduled by the first DCI and configured with CBG; and
the maximum number of PDSCHs allowed to be scheduled by the first DCI of the scheduling cell, or the maximum number of scheduled cells allowed to be scheduled by the first DCI of the scheduling cell, or a preset quantity of PDSCHs, or a preset quantity of scheduled cells.

In this embodiment of this application, optionally, the first HARQ ACK bit quantity is calculated by using the following formula:

$$N_{HARQ-ACK,\ max}^{CBG/TB,\ max} \cdot N_{PDSCH,\ c}^{max}$$

or

$$N_{HARQ-ACK,\ max}^{CBG/TB,\ max} \cdot N_{PDSCH,\ c}^{max} *e+f$$

where $N_{HARQ-ACK,\ max}^{CBG/TB,\ max}$ is a maximum value of $N_{TB,\ n}^{DL} \cdot N_{HARQ-ACK,\ n}^{CBG/TB,\ max}$ for the scheduled cell that is scheduled by the first DCI and configured with CBG;

$N_{TB,\ n}^{DL}$ is the maximum number of codewords for a scheduled cell n scheduled by the first DCI and configured with CBG, where the scheduled cell n is any one scheduled cell in scheduled cells scheduled by the first DCI and configured with CBG;

$N_{HARQ-ACK,\ n}^{CBG/TB,\ max}$ is the maximum number of CBGs configured for the HARQ-ACK , n scheduled cell n that is scheduled by the first DCI and configured with CBG;

$N^{max}_{PDSCH,c}$ is the maximum number of PDSCHs allowed to be scheduled by first DCI of a scheduling cell c, or the maximum number of scheduled cells allowed to be scheduled by the first DCI of the scheduling cell, or a preset quantity of PDSCHs, or a preset quantity of scheduled cells, where the scheduling cell c is any one scheduling cell in the third quantity of scheduling cells; and

e and f are preset values.

In this embodiment of this application, optionally, the determining module 51 is configured to: if none of the scheduled cells scheduled by the first DCI are configured with CBG, generate a second quantity of HARQ ACK bits for a PDSCH scheduled by the detected first DCI.

In this embodiment of this application, optionally, the determining module 51 is configured to: perform DAI counting separately for at least part of the following DCIs, and separately generate a corresponding sub-codebook:

fourth DCI not for scheduling a scheduled cell configured with CBG, where the fourth DCI is used for scheduling one PDSCH;
fourth DCI for scheduling a scheduled cell configured with CBG;
first DCI not for scheduling a scheduled cell configured with CBG; and
first DCI for scheduling a scheduled cell configured with CBG.

In this embodiment of this application, optionally, the determining module 51 is configured to: perform DAI counting separately for the following DCIs, and separately generate three sub-codebooks:

fourth DCI not for scheduling a scheduled cell configured with CBG, where the fourth DCI is used for scheduling one PDSCH;
fourth DCI for scheduling a scheduled cell configured with CBG; and
first DCI not for scheduling a scheduled cell configured with CBG;
or
perform DAI counting for the fourth DCI for scheduling a scheduled cell configured with CBG and the first DCI not for scheduling a scheduled cell configured with CBG, and perform DAI counting for the fourth DCI not for scheduling a scheduled cell configured with CBG, to generate two sub-codebooks, where
HARQ ACKs for PDSCHs scheduled by the fourth DCI not for scheduling a scheduled cell configured with CBG are in one sub-codebook; and HARQ ACKs for PDSCHs scheduled by the first DCI for scheduling a scheduled cell configured with CBG and those scheduled by the first DCI not for scheduling a scheduled cell configured with CBG are in one sub-codebook.

In this embodiment of this application, optionally, the following schedulings are allowed to be simultaneously configured for scheduling cells in a same serving cell group: scheduling for scheduling PDSCHs of a plurality of cells by one DCI, and scheduling for scheduling CBG-based PDSCHs by one DCI.

In this embodiment of this application, optionally, the determining module 51 is configured to: perform C-DAI and/or T-DAI counting separately for the following DCIs, and separately generate three sub-codebooks:

fourth DCI, where the fourth DCI is used for scheduling one PDSCH;
second DCI, where the second DCI is used for scheduling a plurality of PDSCHs of one cell; and
the first DCI.

In this embodiment of this application, optionally, the determining module 51 is configured to: perform C-DAI and/or T-DAI counting for second DCI and the first DCI, and perform C-DAI and/or T-DAI counting for fourth DCI, to generate two sub-codebooks; where
HARQ ACKs for PDSCHs scheduled by the second DCI and the first DCI are in one sub-codebook, and HARQ ACKs for PDSCHs scheduled by the fourth DCI are in one sub-codebook, where the fourth DCI is used for scheduling one PDSCH.

In this embodiment of this application, optionally, the determining module 51 is configured to: for the first quantity of scheduling cells, monitor first DCI in each scheduling cell at each PDCCH monitoring occasion; and generate a fifth quantity of HARQ ACK bits for each scheduling cell according to the detected first DCI of the scheduling cell; where

the scheduling cell is a cell configured to transmit first DCI or a cell configured to schedule a plurality of other cells; and
the fifth quantity is a maximum value of a first maximum value and a second maximum value, where the first maximum value is a maximum value of first HARQ ACK bit quantities for scheduling cells configured with the first DCI, and the second maximum value is a maximum value of third HARQ ACK bit quantities for scheduling cells configured with second DCI.

In this embodiment of this application, optionally, the maximum number of PDSCHs allowed to be scheduled by the first DCI is the same as that allowed to be scheduled by the second DCI.

In this embodiment of this application, optionally, the first DCI and the second DCI need not to be a same DCI.

In this embodiment of this application, optionally, the following scheduling is allowed to be configured simultaneously for scheduling cells in a same serving cell group: scheduling for scheduling PDSCHs of a plurality of cells by one DCI, and scheduling for scheduling a plurality of PDSCHs of one cell by one DCI; where the second DCI is used for scheduling a plurality of PDSCHs of one cell.

In this embodiment of this application, optionally, a T-DAI is present in the first DCI is specified by a protocol or configured by a higher layer.

In this embodiment of this application, optionally, the HARQ ACK feedback apparatus 50 further includes:
a transmission module, configured to: in a case that the first DCI indicates a codeword of a scheduled cell being 2 and a maximum codeword of the scheduled cell configured by a higher layer is 1, transmit one transport block to the scheduled cell based on information related to the 1st transport block in the first DCI.

In this embodiment of this application, optionally, the determining module 51 is configured to implement that: if one cell is actually scheduled by the first DCI, or a cell actually scheduled by the first DCI is bound to feedback of 1 bit for a same transport block, HARQ ACKs for PDSCHs scheduled by the first DCI and fourth DCI are in a same sub-codebook, where the fourth DCI is used for scheduling one PDSCH.

In this embodiment of this application, optionally, the following schedulings are not allowed to be simultaneously configured for scheduling cells in a same serving cell group: scheduling for scheduling PDSCHs of a plurality of cells by one DCI, scheduling for scheduling a plurality of PDSCHs of one cell by one DCI, and scheduling for scheduling CBG-based PDSCHs by one DCI;

or

the following schedulings are allowed to be simultaneously configured for scheduling cells in a same serving cell group: scheduling for scheduling PDSCHs of a plurality of cells by one DCI, and scheduling for scheduling a plurality of PDSCHs of one cell by one DCI;

or

the following schedulings are allowed to be simultaneously configured for scheduling cells in a same serving cell group: scheduling for scheduling PDSCHs of a plurality of cells by one DCI, and scheduling for scheduling CBG-based PDSCHs by one DCI.

The HARQ ACK feedback apparatus in this embodiment of this application may be an electronic device, such as an electronic device with an operating system, or a component in the electronic device, such as an integrated circuit or a chip. The electronic device may be a terminal or other devices than the terminal. For example, the terminal may include, but is not limited to, the types of the terminal 11 listed above, and other devices may be a server, a network attached storage (Network Attached Storage, NAS), and the like. This is not limited in the embodiment of this application.

The HARQ ACK feedback apparatus provided in this embodiment of this application can implement the processes implemented in the method embodiment in FIG. 3, with the same technical effects achieved. To avoid repetition, details are not described herein again.

Referring to FIG. 6, an embodiment of this application further provides a HARQ ACK feedback apparatus 60, including:
a receiving module 61, configured to receive a HARQ ACK codebook sent by a terminal, where the HARQ ACK codebook includes HARQ ACK bits corresponding to PDSCHs scheduled by first DCI, and each first DCI is used for scheduling PDSCHs of a plurality of cells.

In this embodiment of this application, for a case that one DCI schedules PDSCHs of a plurality of cells, a HARQ ACK bit feedback mode is clarified, so that consistent understanding is achieved between the terminal and the network side.

In this embodiment of this application, optionally, the number of HARQ ACK bits corresponding to PDSCHs scheduled by the first DCI is a second quantity; and

the second quantity is a maximum value of first HARQ ACK bit quantities for scheduling cells in a first quantity of scheduling cells; where
the first HARQ ACK bit quantity is related to at least one of the following information:

the maximum number of codewords that is configured for a scheduled cell scheduled by the first DCI of the scheduling cell; and

the maximum number of PDSCHs allowed to be scheduled by the first DCI of the scheduling cell, or the maximum number of scheduled cells allowed to be scheduled by the first DCI of the scheduling cell, or a preset quantity of PDSCHs, or a preset quantity of scheduled cells;

or

the second quantity is a maximum value of second HARQ ACK bit quantities for scheduling cells in the first quantity of scheduling cells; where

the second HARQ ACK bit quantity is related to at least one of the following information:

the maximum number of codewords that is configured for a scheduled cell scheduled by the first DCI of the scheduling cell; and

a maximum value of third HARQ ACK bit quantities corresponding to a cell combination allowed to be scheduled by the first DCI of the scheduling cell, where the third HARQ ACK bit quantity is a sum of the maximum number of codewords of the cell combination allowed to be scheduled by the first DCI.

In this embodiment of this application, optionally, the HARQ ACK codebook includes a first sub-codebook and a second sub-codebook, a HARQ ACK of a PDSCH scheduled by fourth DCI is in the first sub-codebook, and a HARQ ACK of a PDSCH scheduled by the first DCI is in the second sub-codebook, where the fourth DCI is used for scheduling one PDSCH.

In this embodiment of this application, optionally, the following schedulings are not allowed to be simultaneously configured for scheduling cells in a same serving cell group: scheduling for scheduling PDSCHs of a plurality of cells by one DCI, scheduling for scheduling a plurality of PDSCHs of one cell by one DCI, and scheduling for scheduling CBG-based PDSCHs by one DCI;

or

the following schedulings are allowed to be simultaneously configured for scheduling cells in a same serving cell group: scheduling for scheduling PDSCHs of a plurality of cells by one DCI, and scheduling for scheduling a plurality of PDSCHs of one cell by one DCI.

In this embodiment of this application, optionally, the number of HARQ ACK bits corresponding to PDSCHs scheduled by the first DCI is a fourth quantity;

the fourth quantity is a maximum value of first HARQ ACK bit quantities for scheduling cells in a third quantity of scheduling cells; and

the first HARQ ACK bit quantity is related to at least one of the following information:

the maximum number of CBGs configured for a cell configured with CBG;

the maximum number of codewords for a scheduled cell configured with CBG; and

the maximum number of PDSCHs allowed to be scheduled by the first DCI of the scheduling cell, or the maximum number of scheduled cells allowed to be scheduled by the first DCI of the scheduling cell, or a preset quantity of PDSCHs, or a preset quantity of scheduled cells;

or

the first HARQ ACK bit quantity is related to at least one of the following information:

the maximum number of CBGs configured for a scheduled cell that is scheduled by the first DCI and configured with CBG;

the maximum number of codewords for the scheduled cell that is scheduled by the first DCI and configured with CBG; and

the maximum number of PDSCHs allowed to be scheduled by the first DCI of the scheduling cell, or the maximum number of scheduled cells allowed to be scheduled by the first DCI of the scheduling cell, or a preset quantity of PDSCHs, or a preset quantity of scheduled cells.

In this embodiment of this application, optionally, the following schedulings are allowed to be simultaneously configured for scheduling cells in a same serving cell group: scheduling for scheduling PDSCHs of a plurality of cells by one DCI, and scheduling for scheduling CBG-based PDSCHs by one DCI.

The HARQ ACK feedback apparatus provided in this embodiment of this application can implement the processes implemented in the method embodiment in FIG. 4, with the same technical effects achieved. To avoid repetition, details are not described herein again.

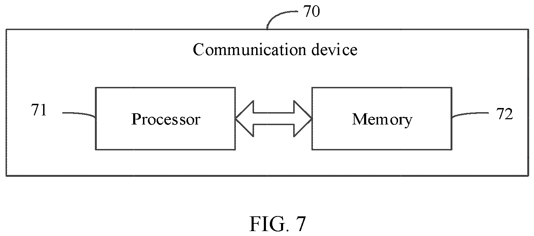

Optionally, as shown in FIG. 7, an embodiment of this application further provides a communication device 70, including a processor 71, a memory 72, and a program or instructions stored in the memory 72 and capable of running on the processor 71. For example, when the communication device 70 is a terminal and when the program or the instructions are executed by the processor 71, the steps of the foregoing embodiments of the HARQ ACK feedback method executed by the terminal are implemented, with the same technical effects achieved. When the communication device 70 is a network-side device and when the program or the instructions are executed by the processor 71, the processes of the foregoing embodiment of the HARQ ACK feedback method executed by the network-side device are implemented, with the same technical effects achieved. To avoid repetition, details are not described herein again.

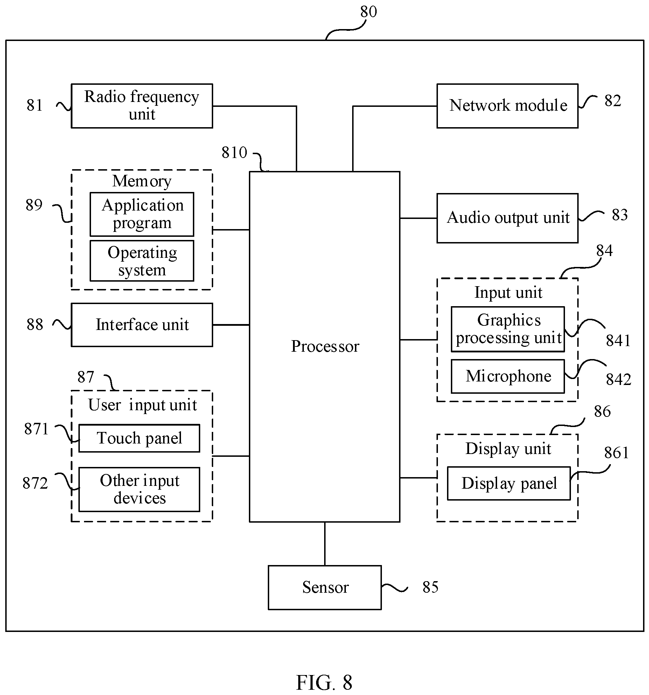

An embodiment of this application further provides a terminal, including a processor and a communication interface, where the processor is configured to determine a HARQ ACK bit corresponding to a PDSCH scheduled by each first DCI of at least one first DCI, where each first DCI is used for scheduling PDSCHs of a plurality of cells; and construct a HARQ ACK codebook based on the HARQ ACK bits. The terminal embodiments correspond to the foregoing terminal-side method embodiments, and the implementation processes and implementations of the foregoing method embodiments can be applied to the terminal embodiments, with the same technical effects achieved. Specifically, FIG. 8 is a schematic diagram of a hardware structure of a terminal for implementing the embodiments of this application.

The terminal 80 includes but is not limited to at least part of components such as a radio frequency unit 81, a network module 82, an audio output unit 83, an input unit 84, a sensor 85, a display unit 86, a user input unit 87, an interface unit 88, a memory 89, and a processor 810.

Persons skilled in the art can understand that the terminal 80 may further include a power supply (for example, a battery) supplying power to the components, and the power supply may be logically connected to the processor 810 through a power management system. In this way, functions such as charge management, discharge management, and power consumption management are implemented by using the power management system. The structure of the terminal shown in FIG. 8 does not constitute any limitation on the terminal. The terminal may include more or fewer components than shown in the figure, or a combination of some components, or the components disposed differently. Details are not described herein again.

It can be understood that in this embodiment of this application, the input unit 84 may include a graphics processing unit (Graphics Processing Unit, GPU) 841 and a microphone 842. The graphics processing unit 841 processes image data of a still picture or video obtained by an image capture apparatus (such as a camera) in a video capture mode or an image capture mode. The display unit 86 may include a display panel 861, and the display panel 861 may be configured in a form of a liquid crystal display, an organic light-emitting diode, and the like. The user input unit 87 may include at least one of a touch panel 871 and other input devices 872. The touch panel 871 is also referred to as a touchscreen. The touch panel 871 may include two parts: a touch detection apparatus and a touch controller. The other input devices 872 may include but are not limited to a physical keyboard, a function key (such as a volume control key or a power on/off key), a trackball, a mouse, a joystick, and the like. Details are not described herein.

In this embodiment of this application, the radio frequency unit 81 receives downlink data from a network-side device, and then sends the downlink data to the processor 810 for processing. In addition, the radio frequency unit 81 may send uplink data to the network-side device. Generally, the radio frequency unit 81 includes but is not limited to an antenna, an amplifier, a transceiver, a coupler, a low noise amplifier, a duplexer, and the like.

The memory 89 may be configured to store software programs or instructions and various data. The memory 89 may include a first storage area for storing a program or instructions and a second storage area for storing data. The first storage area may store an operating system, an application program or instruction required by at least one function (for example, a sound playback function or an image playback function), and the like. In addition, the memory 89 may include a volatile memory or a non-volatile memory, or the memory 89 may include both a volatile memory and a non-volatile memory. The non-volatile memory may be a read-only memory (Read-Only Memory, ROM), a programmable read only memory (Programmable ROM, PROM), an erasable programmable read-only memory (Erasable PROM, EPROM), and an electrically erasable programmable read-only memory (Electrically EPROM, EEPROM), or flash memory. The volatile memory can be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synch link DRAM, SLDRAM), and a direct rambus random access memory (Direct Rambus RAM, DRRAM). The memory 89 in the embodiments of this application includes but is not limited to these and any other suitable types of memories.

The processor 810 may include one or more processing units. Optionally, an application processor and a modem processor may be integrated in the processor 810. The application processor primarily processes operations involving an operating system, user interfaces, application programs, and the like. The modem processor primarily processes radio communication signals, for example, being a baseband processor. It can be understood that the modem processor may alternatively be not integrated in the processor 810.

The processor 810 is configured to determine a HARQ ACK bit corresponding to a PDSCH scheduled by each first DCI of at least one first DCI, where each first DCI is used for scheduling PDSCHs of a plurality of cells; and construct a HARQ ACK codebook based on the HARQ ACK bits.

In this embodiment of this application, for a case that one DCI schedules PDSCHs of a plurality of cells, a HARQ ACK bit feedback mode is clarified, so that consistent understanding is achieved between the terminal and the network side.

In this embodiment of this application, optionally, each cell in the plurality of cells corresponds to at least one PDSCH.

In this embodiment of this application, optionally, the processor 810 is configured to: for a first quantity of scheduling cells, monitor first DCI in each scheduling cell at each PDCCH monitoring occasion; and generate a second quantity of HARQ ACK bits for each scheduling cell according to the detected first DCI of the scheduling cell; where the scheduling cell is a cell configured to transmit first DCI or a cell configured to schedule a plurality of other cells.

In this embodiment of this application, optionally, the second quantity is a maximum value of first HARQ ACK bit quantities for scheduling cells in the first quantity of scheduling cells, and the first HARQ ACK bit quantity is related to at least one of the following information:

the maximum number of codewords that is configured for a scheduled cell scheduled by the first DCI of the scheduling cell; and

the maximum number of PDSCHs allowed to be scheduled by the first DCI of the scheduling cell, or the maximum number of scheduled cells allowed to be scheduled by the first DCI of the scheduling cell, or a preset quantity of PDSCHs, or a preset quantity of scheduled cells.

In this embodiment of this application, optionally, the first HARQ ACK bit quantity is calculated by using the following formula:

$$N_{TB,c}^{DL,multi} \cdot N_{PDSCH,c}^{max}$$

or

$$N_{TB,c}^{DL,multi} \cdot N_{PDSCH,c}^{max} *a+b$$

where $N_{TB,c}^{DL,multi}$ is the maximum number of codewords that is configured for a scheduled cell scheduled by first DCI of a scheduling cell c, and the scheduling cell c is any one scheduling cell in the first quantity of scheduling cells;

$N_{PDSCH,c}^{max}$ is the maximum number of PDSCHs allowed to be scheduled by the first DCI of the scheduling cell c, or the maximum number of scheduled cells allowed to be scheduled by the first DCI of the scheduling cell c, or a preset quantity of PDSCHs, or a preset quantity of scheduled cells; and

a and b are preset values.

In this embodiment of this application, optionally, in a case that at least one of the scheduled cells is configured with dual codewords and at least one of the scheduled cells is configured with a single codeword, the processor 810 is configured to: generate HARQ ACK bits of two transport blocks for the scheduled cell configured with the single codeword, where a HARQ ACK bit of the 2nd transport block is located after a HARQ ACK bit of the 1st transport block, and is an ACK bit or a NACK bit; or the processor 810 is configured to generate only a HARQ ACK bit of the 1st transport block for the scheduled cell configured with the single codeword.

In this embodiment of this application, optionally, the HARQ ACK bit of the 2nd transport block is NACK in a case that space division multiplexing feedback is not configured, and the HARQ ACK bit of the 2nd transport block is ACK in a case that the space division multiplexing feedback is configured.

In this embodiment of this application, optionally, the second quantity is a maximum value of second HARQ ACK bit quantities for scheduling cells in the first quantity of scheduling cells, and the second HARQ ACK bit quantity is related to at least one of the following information:

the maximum number of codewords that is configured for a scheduled cell scheduled by the first DCI of the scheduling cell; and

a maximum value of third HARQ ACK bit quantities corresponding to a cell combination allowed to be scheduled by the first DCI of the scheduling cell, where the third HARQ ACK bit quantity is a sum of the maximum number of codewords of the cell combination allowed to be scheduled by the first DCI.

In this embodiment of this application, optionally, in a case that at least one scheduled cell is configured with dual codewords and at least one scheduled cell is configured with a single codeword, the processor 810 is configured to feed back only a HARQ ACK bit of the 1st transport block for the scheduled cell configured with the single codeword.

In this embodiment of this application, optionally, the processor 810 is configured to: if the first HARQ ACK bit quantity for the scheduling cell is less than the second quantity, fill a NACK bit into a first difference value of bits behind a HARQ ACK bit of the scheduling cell, where the first difference value is a difference value between the second quantity and the first HARQ ACK bit quantity.

In this embodiment of this application, optionally, the processor 810 is configured to: if the second HARQ ACK bit quantity for the scheduling cell is less than the second quantity, fill, for the terminal, a NACK bit into a first difference value of bits behind a HARQ ACK bit of the scheduling cell, where the first difference value is a difference value between the second quantity and the second HARQ ACK bit quantity.

In this embodiment of this application, optionally, the processor 810 is configured to: construct the HARQ ACK codebook based on an index order of the first quantity of scheduling cells and HARQ ACK bits of the first quantity of the scheduling cells.

In this embodiment of this application, optionally, the HARQ ACK codebook includes a first sub-codebook and a second sub-codebook, a HARQ ACK of a PDSCH scheduled by fourth DCI is in the first sub-codebook, and a HARQ ACK of a PDSCH scheduled by the first DCI is in the second sub-codebook, where the fourth DCI is used for scheduling one PDSCH.

In this embodiment of this application, optionally, the C-DAI and/or T-DAI counting for the first sub-codebook and the second sub-codebook is performed separately.

In this embodiment of this application, optionally, the second sub-codebook is cascaded before or after the first sub-codebook.

In this embodiment of this application, optionally, the following schedulings are not allowed to be simultaneously configured for scheduling cells in a same serving cell group: scheduling for scheduling PDSCHs of a plurality of cells by one DCI, scheduling for scheduling a plurality of PDSCHs of one cell by one DCI, and scheduling for scheduling CBG-based PDSCHs by one DCI;

or

the following schedulings are allowed to be simultaneously configured for scheduling cells in a same serving cell group: scheduling for scheduling PDSCHs of a plurality of cells by one DCI, and scheduling for scheduling a plurality of PDSCHs of one cell by one DCI.

In this embodiment of this application, optionally, the processor 810 is configured to: for a third quantity of scheduling cells, monitor first DCI in each scheduling cell at each PDCCH monitoring occasion; and generate a fourth quantity of HARQ ACK bits for each scheduling cell according to the detected first DCI of the scheduling cell; where

the scheduling cell is a cell configured to transmit the first DCI and having at least one scheduled cell being configured with CBG in scheduled cells scheduled by the first DCI; and

the fourth quantity is a maximum value of first HARQ ACK bit quantities for scheduling cells in the third quantity of scheduling cells.

In this embodiment of this application, optionally, the first HARQ ACK bit quantity is related to at least one of the following information:

the maximum number of CBGs configured for a cell configured with CBG;

the maximum number of codewords for the cell configured with CBG; and

the maximum number of PDSCHs allowed to be scheduled by the first DCI of the scheduling cell, or the maximum number of scheduled cells allowed to be scheduled by the first DCI of the scheduling cell, or a preset quantity of PDSCHs, or a preset quantity of scheduled cells.

In this embodiment of this application, optionally, the first HARQ ACK bit quantity is calculated by using the following formula:

$$N^{CBG/TB,\,max}_{HARQ-ACK,\,max} \cdot N^{max}_{PDSCH,\,c}$$

or

$$N^{CBG/TB,\,max}_{HARQ-ACK,\,max} \cdot N^{max}_{PDSCH,\,c} *c+d$$

where $N^{CBG/TB,\,max}_{HARQ-ACK,\,max}$ is a maximum value of $N^{DL}_{TB,\,m} \cdot N^{CBG/TB,\,max}_{HARQ-ACK,\,m}$ *for the* cell configured with CBG;

$N^{DL}_{TB,\,m}$ is the maximum number of codewords for a cell m configured with CBG; where the cell m is any one cell in cells configured with CBG;

$N^{CBG/TB,\,max}_{HARQ-ACK,\,m}$ is the maximum number of CBGs configured for the cell m configured with CBG;

$N^{max}_{PDSCH,\,c}$ is the maximum number of PDSCHs allowed to be scheduled by first DCI of a scheduling cell c, or the maximum number of scheduled cells allowed to be scheduled by the first DCI of the scheduling cell c, or a preset quantity of PDSCHs, or a preset quantity of scheduled cells, where the scheduling cell c is any one scheduling cell in the third quantity of scheduling cells; and
c and d are preset values.

In this embodiment of this application, optionally, the first HARQ ACK bit quantity is related to at least one of the following information:

the maximum number of CBGs configured for a scheduled cell that is scheduled by the first DCI and configured with CBG;
the maximum number of codewords for the scheduled cell that is scheduled by the first DCI and configured with CBG; and
the maximum number of PDSCHs allowed to be scheduled by the first DCI of the scheduling cell, or the maximum number of scheduled cells allowed to be scheduled by the first DCI of the scheduling cell, or a preset quantity of PDSCHs, or a preset quantity of scheduled cells.

In this embodiment of this application, optionally, the first HARQ ACK bit quantity is calculated by using the following formula:

$$N^{CBG/TB,\,max}_{HARQ-ACK,\,max} \cdot N^{max}_{PDSCH,\,c}$$

or

$$N^{CBG/TB,\,max}_{HARQ-ACK,\,max} \cdot N^{max}_{PDSCH,\,c} *e+f$$

where $N^{CBG/TB,\,max}_{HARQ-ACK,\,max}$ is a maximum value of $N^{DL}_{TB,\,n} \cdot N^{CBG/TB,\,max}_{HARQ-ACK,\,n}$ for the scheduled cell that is scheduled by the first DCI and configured with CBG;

$N^{DL}_{TB,\,n}$ is the maximum number of codewords for a scheduled cell n scheduled by the first DCI and configured with CBG, where the scheduled cell n is any one scheduled cell in scheduled cells scheduled by the first DCI and configured with CBG;

$N_{HARQ-ACK,\,n}^{CBG/TB,\,max}$ is the maximum number of CBGs configured for the scheduled cell n that is scheduled by the first DCI and configured with CBG;

$N_{PDSCH,\,c}^{max}$ is the maximum number of PDSCHs allowed to be scheduled by first DCI of a scheduling cell c, or the maximum number of scheduled cells allowed to be scheduled by the first DCI of the scheduling cell c, or a preset quantity of PDSCHs, or a preset quantity of scheduled cells, where the scheduling cell c is any one scheduling cell in the third quantity of scheduling cells; and

e and f are preset values.

In this embodiment of this application, optionally, the processor 810 is configured to: if none of the scheduled cells scheduled by the first DCI are configured with CBG, generate a second quantity of HARQ ACK bits for a PDSCH scheduled by the detected first DCI.

In this embodiment of this application, optionally, the processor 810 is configured to: perform DAI counting separately for at least part of the following DCIs, and separately generate a corresponding sub-codebook:

fourth DCI not for scheduling a scheduled cell configured with CBG, where the fourth DCI is used for scheduling one PDSCH;
fourth DCI for scheduling a scheduled cell configured with CBG;
first DCI not for scheduling a scheduled cell configured with CBG; and
first DCI for scheduling a scheduled cell configured with CBG.

In this embodiment of this application, optionally, the processor 810 is configured to: perform DAI counting separately for the following DCIs, and separately generate three sub-codebooks:

fourth DCI not for scheduling a scheduled cell configured with CBG, where the fourth DCI is used for scheduling one PDSCH;
fourth DCI for scheduling a scheduled cell configured with CBG; and
first DCI not for scheduling a scheduled cell configured with CBG;
or
perform DAI counting for the fourth DCI for scheduling a scheduled cell configured with CBG and the first DCI not for scheduling a scheduled cell configured with CBG, and perform DAI counting for the fourth DCI not for scheduling a scheduled cell configured with CBG, to generate two sub-codebooks, where
HARQ ACKs for PDSCHs scheduled by the fourth DCI not for scheduling a scheduled cell configured with CBG are in one sub-codebook; and HARQ ACKs for PDSCHs scheduled by the first DCI for scheduling a scheduled cell configured with CBG and those scheduled by the first DCI not for scheduling a scheduled cell configured with CBG are in one sub-codebook.

In this embodiment of this application, optionally, the following schedulings are allowed to be simultaneously configured for scheduling cells in a same serving cell group: scheduling for scheduling PDSCHs of a plurality of cells by one DCI, and scheduling for scheduling CBG-based PDSCHs by one DCI.

In this embodiment of this application, optionally, the processor 810 is configured to: perform C-DAI and/or T-DAI counting separately for the following DCIs, and separately generate three sub-codebooks:

fourth DCI, where the fourth DCI is used for scheduling one PDSCH;
second DCI, where the second DCI is used for scheduling a plurality of PDSCHs of one cell; and
the first DCI.

In this embodiment of this application, optionally, the processor 810 is configured to: perform C-DAI and/or T-DAI counting for second DCI and the first DCI, and perform C-DAI and/or T-DAI counting for fourth DCI, to generate two sub-codebooks; where
HARQ ACKs for PDSCHs scheduled by the second DCI and the first DCI are in one sub-codebook, and HARQ ACKs for PDSCHs scheduled by the fourth DCI are in one sub-codebook, where the fourth DCI is used for scheduling one PDSCH.

In this embodiment of this application, optionally, the processor 810 is configured to: for a first quantity of scheduling cells, monitor first DCI in each scheduling cell at each physical downlink control channel PDCCH monitoring occasion; and generate a fifth quantity of HARQ ACK bits for each scheduling cell according to the detected first DCI of the scheduling cell; where

the scheduling cell is a cell configured to transmit first DCI or a cell configured to schedule a plurality of other cells; and the fifth quantity is a maximum value of a first maximum value and a second maximum value, where the first maximum value is a maximum value of first HARQ ACK bit quantities for scheduling cells configured with the first DCI, and the second maximum value is a maximum value of third HARQ ACK bit quantities for scheduling cells configured with second DCI.

In this embodiment of this application, optionally, the maximum number of PDSCHs allowed to be scheduled by the first DCI is the same as that allowed to be scheduled by the second DCI.

In this embodiment of this application, optionally, the first DCI and the second DCI need not to be a same DCI.

In this embodiment of this application, optionally, the following scheduling is allowed to be configured simultaneously for scheduling cells in a same serving cell group: scheduling for scheduling PDSCHs of a plurality of cells by one DCI, and scheduling for scheduling a plurality of PDSCHs of one cell by one DCI; where the second DCI is used for scheduling a plurality of PDSCHs of one cell.

In this embodiment of this application, optionally, a T-DAI is present in the first DCI is specified by a protocol or configured by a higher layer.

In this embodiment of this application, optionally, the radio frequency unit 81 is configured to: in a case that the first DCI indicates a codeword of a scheduled cell being 2 and a maximum codeword of the scheduled cell configured by a higher layer is 1, transmit one transport block to the scheduled cell based on information related to the 1st transport block in the first DCI.

In this embodiment of this application, optionally, the processor 810 is configured to implement that: if one cell is actually scheduled by the first DCI, or a cell actually scheduled by the first DCI is bound to feedback of 1 bit for a same transport block, HARQ ACKs for PDSCHs scheduled by the first DCI and fourth DCI are in a same sub-codebook, where the fourth DCI is used for scheduling one PDSCH.

In this embodiment of this application, optionally, the following schedulings are not allowed to be simultaneously configured for scheduling cells in a same serving cell group: scheduling for scheduling PDSCHs of a plurality of cells by one DCI, scheduling for scheduling a plurality of PDSCHs of one cell by one DCI, and scheduling for scheduling CBG-based PDSCHs by one DCI;

or

the following schedulings are allowed to be simultaneously configured for scheduling cells in a same serving cell group: scheduling for scheduling PDSCHs of a plurality of cells by one DCI, and scheduling for scheduling a plurality of PDSCHs of one cell by one DCI;

or

the following schedulings are allowed to be simultaneously configured for scheduling cells in a same serving cell group: scheduling for scheduling PDSCHs of a plurality of cells by one DCI, and scheduling for scheduling CBG-based PDSCHs by one DCI.

An embodiment of this application further provides a network-side device is provided, including a processor and a communication interface, where the communication interface is configured to receive a HARQ ACK codebook sent by a terminal, where the HARQ ACK codebook includes HARQ ACK bits corresponding to PDSCHs scheduled by first DCI, and each first DCI is used for scheduling PDSCHs of a plurality of cells. The network-side device embodiments correspond to the foregoing network-side device method embodiments, and the implementation processes and implementations of the foregoing method embodiments can be applied to the network-side device embodiments, with the same technical effects achieved.

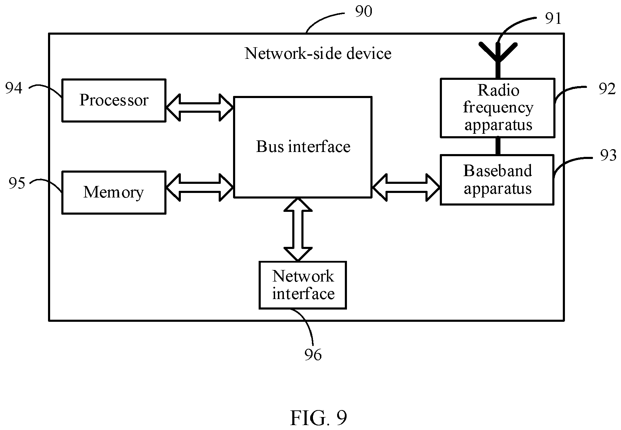

Specifically, an embodiment of this application further provides a network-side device. As shown in FIG. 9, the network-side device 90 includes an antenna 91, a radio frequency apparatus 92, a baseband apparatus 93, a processor 94, and a memory 95. The antenna 91 is connected to the radio frequency apparatus 92. In an uplink direction, the radio frequency apparatus 92 receives information by using the antenna 91, and sends the received information to the baseband apparatus 93 for processing. In a downlink direction, the baseband apparatus 93 processes to-be-sent information, and sends the information to the radio frequency apparatus 92; and the radio frequency apparatus 92 processes the received information and then sends the information out by using the antenna 91.

The method executed by the network-side device in the foregoing embodiments can be implemented in the baseband apparatus 93, and the baseband apparatus 93 includes a baseband processor.

The baseband apparatus 93 may include, for example, at least one baseband board, where a plurality of chips are disposed on the baseband board. As shown in FIG. 9, one of the chips is, for example, a baseband processor, and is connected to the memory 95 through the bus interface, to invoke a program in the memory 95 to perform the operations of the network-side device shown in the foregoing method embodiments.

The network-side device may further include a network interface 96, where the interface is, for example, a common public radio interface (common public radio interface, CPRI).

Specifically, the network-side device 90 in this embodiment of this application further includes: instructions or a program stored in the memory 95 and capable of running on the processor 94. The processor 94 invokes the instructions or program in the memory 95 to execute the method executed by the modules shown in FIG. 6, with the same technical effects achieved. To avoid repetition, details are not repeated herein.

An embodiment of this application further provides a readable storage medium, where a program or instructions are stored in the readable storage medium. When the program or the instructions are executed by a processor, the processes of the foregoing embodiments of the HARQ ACK feedback method can be implemented, with the same technical effects achieved. To avoid repetition, details are not described herein again.

The processor is a processor in the terminal described in the foregoing embodiments. The readable storage medium includes a computer-readable storage medium, for example, a computer read only memory ROM, a random access memory RAM, a magnetic disk, or an optical disc.

An embodiment of this application further provides a chip, where the chip includes a processor and a communication interface. The communication interface is coupled to the processor, and the processor is configured to run a program or instructions to implement the processes of the foregoing HARQ ACK feedback method embodiments, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program/program product, where the computer program/program product is stored in a storage medium, and when being executed by at least one processor, the computer program/program product is configured to implement the processes of the foregoing HARQ ACK feedback method embodiments, with the same technical effects achieved. To avoid repetition, details are not repeated herein.

An embodiment of this application further provides a communication system, including a terminal and a network-side device, where the terminal can be configured to execute the processes of the HARQ ACK feedback method executed by the terminal, and the network-side device can be configured to execute the processes of the HARQ ACK feedback method executed by the network-side device.

Persons of ordinary skill in the art may realize that units and algorithm steps of various examples described with reference to the embodiments disclosed in this specification can be implemented by using electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this disclosure.

It may be clearly understood by persons skilled in the art that, for the purpose of convenient and brief description, for a detailed working process of the foregoing system, apparatus, and unit, reference may be made to a corresponding process in the foregoing method embodiments, and details are not described again herein.

In the embodiments provided in this application, it should be understood that the disclosed apparatus and method may be implemented in other manners. For example, the described apparatus embodiment is merely an example. For example, the unit division is merely logical function division and may be other division in actual implementation. For example, a plurality of units or components may be combined or integrated into another system, or some features may be ignored or may not be performed. In addition, the displayed or discussed mutual couplings or direct couplings or communications connections may be implemented by using some interfaces. The indirect couplings or communications connections between apparatuses or units may be implemented in electrical, mechanical, or other forms.

Units described as separate components may or may not be physically separated. A component displayed as a unit may be one or more physical units, and may be located in one place, or may be distributed in a plurality of network elements. Some or all of the units may be selected based on actual requirements to achieve the objectives of the solutions of the embodiments.

In addition, functional units in the embodiments of this disclosure may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of the present disclosure essentially, or the part contributing to the prior art, or some of the technical solutions may be embodied in a form of a software product. The computer software product is stored in a storage medium, and includes several instructions for instructing a computer device (which may be a personal computer, a server, a network device, or the like) to perform all or some of the steps of the methods described in the embodiments of the present disclosure. The foregoing storage medium includes: any medium that can store program code, such as a USB flash drive, a removable hard disk, a ROM, a RAM, a magnetic disk, or an optical disc.

A person of ordinary skill in the art may understand that all or some of the processes of the methods in the embodiments may be implemented by a computer program controlling relevant hardware. The program may be stored in a computer readable storage medium. When the program runs, the processes of the method embodiments may be included. The storage medium may include: a magnetic disk, an optical disc, a read-only memory (Read-Only Memory, ROM), or a random access memory (Random Access Memory, RAM).

It should be noted that in this specification, the term "include", "comprise", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described method may be performed in an order different from the order described, and steps may be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, a network device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

**Claims**

1. A hybrid automatic repeat request acknowledgement HARQ ACK feedback method, comprising:

    determining, by a terminal, a HARQ ACK bit corresponding to a physical downlink shared channel PDSCH scheduled by each first downlink control information DCI of at least one first DCI, wherein each first DCI is used for scheduling PDSCHs of a plurality of cells; and
    constructing, by the terminal, a HARQ ACK codebook based on the HARQ ACK bits.

2. The method according to claim 1, wherein each cell in the plurality of cells corresponds to at least one PDSCH.

3. The method according to claim 1, wherein the determining, by a terminal, a HARQ ACK bit corresponding to a PDSCH scheduled by each first DCI of at least one first DCI comprises:

    for a first quantity of scheduling cells, monitoring, by the terminal, first DCI in each scheduling cell at each physical downlink control channel PDCCH monitoring occasion; and
    generating, by the terminal, a second quantity of HARQ ACK bits for each scheduling cell according to the detected first DCI of the scheduling cell; wherein
    the scheduling cell is a cell configured to transmit first DCI or a cell configured to schedule a plurality of other cells.

4. The method according to claim 3, wherein the second quantity is a maximum value of first HARQ ACK bit quantities for scheduling cells in the first quantity of scheduling cells, and the first HARQ ACK bit quantity is related to at least one of the following information:

    the maximum number of codewords that is configured for a scheduled cell scheduled by the first DCI of the scheduling cell; and

the maximum number of PDSCHs allowed to be scheduled by the first DCI of the scheduling cell, or the maximum number of scheduled cells allowed to be scheduled by the first DCI of the scheduling cell, or a preset quantity of PDSCHs, or a preset quantity of scheduled cells.

5. The method according to claim 4, wherein the first HARQ ACK bit quantity is calculated by using the following formula:

$$N_{TB,c}^{DL,multi} \cdot N_{PDSCH,c}^{max}$$

or

$$N_{TB,c}^{DL,multi} \cdot N_{PDSCH,c}^{max} *a+b$$

wherein $N_{TB,c}^{DL,multi}$ is the maximum number of codewords that is configured for a scheduled cell scheduled by first DCI of a scheduling cell c, and the scheduling cell c is any one scheduling cell in the first quantity of scheduling cells;

$N_{PDSCH,c}^{max}$ is the maximum number of PDSCHs allowed to be scheduled by the first DCI of the scheduling cell c, or the maximum number of scheduled cells allowed to be scheduled by the first DCI of the scheduling cell c, or a preset quantity of PDSCHs, or a preset quantity of scheduled cells; and
a and b are preset values.

6. The method according to claim 4 or 5, wherein in a case that at least one of the scheduled cells is configured with dual codewords and at least one of the scheduled cells is configured with a single codeword, the determining, by a terminal, a HARQ ACK bit corresponding to a PDSCH scheduled by each first DCI of at least one first DCI comprises:

generating HARQ ACK bits of two transport blocks for the scheduled cell configured with the single codeword, wherein a HARQ ACK bit of the 2nd transport block is located after a HARQ ACK bit of the 1st transport block, and is an ACK bit or a NACK bit;
or
generating only a HARQ ACK bit of the 1st transport block for the scheduled cell configured with the single codeword.

7. The method according to claim 6, wherein the HARQ ACK bit of the 2nd transport block is NACK in a case that space division multiplexing feedback is not configured, and the HARQ ACK bit of the 2nd transport block is ACK in a case that the space division multiplexing feedback is configured.

8. The method according to claim 3, wherein the second quantity is a maximum value of second HARQ ACK bit quantities for scheduling cells in the first quantity of scheduling cells, and the second HARQ ACK bit quantity is related to at least one of the following information:

the maximum number of codewords that is configured for a scheduled cell scheduled by the first DCI of the scheduling cell; and
a maximum value of third HARQ ACK bit quantities corresponding to a cell combination allowed to be scheduled by the first DCI of the scheduling cell, wherein the third HARQ ACK bit quantity is a sum of the maximum number of codewords of the cell combination allowed to be scheduled by the first DCI.

9. The method according to claim 8, wherein in a case that at least one scheduled cell is configured with dual codewords and at least one scheduled cell is configured with a single codeword, the determining, by a terminal, a HARQ ACK bit corresponding to a PDSCH scheduled by each first DCI of at least one first DCI comprises:
feeding back only a HARQ ACK bit of the 1st transport block for the scheduled cell configured with the single codeword.

10. The method according to claim 4, wherein the generating, by the terminal, a second quantity of HARQ ACK bits for each scheduling cell according to the detected first DCI of the scheduling cell comprises:
if the first HARQ ACK bit quantity for the scheduling cell is less than the second quantity, filling, by the terminal, a NACK bit into a first difference value of bits behind a HARQ ACK bit of the scheduling cell, wherein the first difference value is a difference value between the second quantity and the first HARQ ACK bit quantity.

11. The method according to claim 8, wherein the generating, by the terminal, a second quantity of HARQ ACK bits for each scheduling cell according to the detected first DCI of the scheduling cell comprises:
if the second HARQ ACK bit quantity for the scheduling cell is less than the second quantity, filling, by the terminal, a NACK bit into a first difference value of bits behind a HARQ ACK bit of the scheduling cell, wherein the first difference value is a difference value between the second quantity and the second HARQ ACK bit quantity.

12. The method according to claim 3, wherein the constructing, by the terminal, a HARQ ACK codebook based on the HARQ ACK bits comprises:
constructing, by the terminal, the HARQ ACK codebook based on an index order of the first quantity of scheduling cells and HARQ ACK bits of the first quantity of the scheduling cells.

13. The method according to claim 1, wherein the HARQ ACK codebook comprises a first sub-codebook and a second sub-codebook, a HARQ ACK of a PDSCH scheduled by fourth DCI is in the first sub-codebook, and a HARQ ACK of a PDSCH scheduled by the first DCI is in the second sub-codebook, wherein the fourth DCI is used for scheduling one PDSCH.

14. The method according to claim 3, wherein

the following schedulings are not allowed to be simultaneously configured for scheduling cells in a same serving cell group: scheduling for scheduling PDSCHs of a plurality of cells by one DCI, scheduling for scheduling a plurality of PDSCHs of one cell by one DCI, and scheduling for scheduling CBG-based PDSCHs by one DCI; or
the following schedulings are allowed to be simultaneously configured for scheduling cells in a same serving cell group: scheduling for scheduling PDSCHs of a plurality of cells by one DCI, and scheduling for scheduling a plurality of PDSCHs of one cell by one DCI.

15. The method according to claim 1, wherein the determining, by a terminal, a HARQ ACK bit corresponding to a PDSCH scheduled by each first DCI of at least one first DCI comprises:

for a third quantity of scheduling cells, monitoring, by the terminal, first DCI in each scheduling cell at each PDCCH monitoring occasion; and
generating, by the terminal, a fourth quantity of HARQ ACK bits for each scheduling cell according to the detected first DCI of the scheduling cell; wherein
the scheduling cell is a cell configured to transmit the first DCI and having at least one scheduled cell being configured with CBG in scheduled cells scheduled by the first DCI; and
the fourth quantity is a maximum value of first HARQ ACK bit quantities for scheduling cells in the third quantity of scheduling cells.

16. The method according to claim 15, wherein the first HARQ ACK bit quantity is related to at least one of the following information:

the maximum number of CBGs configured for a cell configured with CBG;
the maximum number of codewords for the cell configured with CBG; and
the maximum number of PDSCHs allowed to be scheduled by the first DCI of the scheduling cell, or the maximum number of scheduled cells allowed to be scheduled by the first DCI of the scheduling cell, or a preset quantity of PDSCHs, or a preset quantity of scheduled cells.

17. The method according to claim 16, wherein the first HARQ ACK bit quantity is calculated by using the following formula:

$$N_{HARQ-ACK,\,max}^{CBG/TB,\,max} \cdot N_{PDSCH,\,c}^{max}$$

or

$$N_{HARQ-ACK,\,max}^{CBG/TB,\,max} \cdot N_{PDSCH,\,c}^{max} * c + d$$

wherein $N_{HARQ-ACK,\,max}^{CBG/TB,\,max}$ is a maximum value of $N_{TB,\,m}^{DL} \cdot N_{HARQ-ACK,\,m}^{CBG/TB,\,max}$ for the cell configured with CBG;

$N_{TB,\,m}^{DL}$ is the maximum number of codewords for a cell m configured with CBG; wherein the cell m is any one cell in cells configured with CBG;

$N_{HARQ-ACK,\,m}^{CBG/TB,\,max}$ is the maximum number of CBGs configured for the cell m configured with CBG;

$N_{PDSCH,\,c}^{max}$ is the maximum number of PDSCHs allowed to be scheduled by first DCI of a scheduling cell c, or the maximum number of scheduled cells allowed to be scheduled by the first DCI of the scheduling cell c, or a preset quantity of PDSCHs, or a preset quantity of scheduled cells, wherein the scheduling cell c is any one scheduling cell in the third quantity of scheduling cells; and
c and d are preset values.

18. The method according to claim 15, wherein the first HARQ ACK bit quantity is related to at least one of the following information:

the maximum number of CBGs configured for a scheduled cell that is scheduled by the first DCI and configured with CBG;
the maximum number of codewords for the scheduled cell that is scheduled by the first DCI and configured with CBG; and
the maximum number of PDSCHs allowed to be scheduled by the first DCI of the scheduling cell, or the maximum number of scheduled cells allowed to be scheduled by the first DCI of the scheduling cell, or a preset quantity of PDSCHs, or a preset quantity of scheduled cells.

19. The method according to claim 18, wherein the first HARQ ACK bit quantity is calculated by using the following formula:

$$N_{HARQ-ACK,\,max}^{CBG/TB,\,max} \cdot N_{PDSCH,\,c}^{max}$$

or

$$N_{HARQ-ACK,\,max}^{CBG/TB,\,max} \cdot N_{PDSCH,\,c}^{max} * e + f$$

wherein $N_{HARQ-ACK,\,max}^{CBG/TB,\,max}$ is a maximum value of $N_{TB,\,n}^{DL} \cdot N_{HARQ-ACK,\,n}^{CBG/TB,\,max}$ for the scheduled cell that is scheduled by the first DCI and configured with CBG;

$N_{TB,n}^{DL}$ is the maximum number of codewords for a scheduled cell n scheduled by the first DCI and configured with CBG, wherein the scheduled cell n is any one scheduled cell in scheduled cells scheduled by the first DCI and configured with CBG;

$N_{HARQ-ACK,n}^{CBG/TB,max}$ is the maximum number of CBGs configured for the scheduled cell n that is scheduled by the first DCI and configured with CBG;

$N_{PDSCH,c}^{max}$ is the maximum number of PDSCHs allowed to be scheduled by first DCI of a scheduling cell c, or the maximum number of scheduled cells allowed to be scheduled by the first DCI of the scheduling cell c, or a preset quantity of PDSCHs, or a preset quantity of scheduled cells, wherein the scheduling cell c is any one scheduling cell in the third quantity of scheduling cells; and
e and f are preset values.

20. The method according to claim 1 or 15, wherein the determining, by a terminal, a HARQ ACK bit corresponding to a PDSCH scheduled by each first DCI of at least one first DCI comprises:
if none of the scheduled cells scheduled by the first DCI are configured with CBG, generating, by the terminal, a second quantity of HARQ ACK bits for a PDSCH scheduled by the detected first DCI.

21. The method according to claim 15 or 20, wherein the determining, by a terminal, a HARQ ACK bit corresponding to a PDSCH scheduled by each first DCI of at least one first DCI comprises:
performing, by the terminal, DAI counting separately for at least part of the following DCIs, and separately generating a corresponding sub-codebook:

fourth DCI not for scheduling a scheduled cell configured with CBG, wherein the fourth DCI is used for scheduling one PDSCH;
fourth DCI for scheduling a scheduled cell configured with CBG;
first DCI not for scheduling a scheduled cell configured with CBG; and
first DCI for scheduling a scheduled cell configured with CBG.

22. The method according to claim 15 or 20, wherein the determining, by a terminal, a HARQ ACK bit corresponding to a PDSCH scheduled by each first DCI of at least one first DCI comprises:
performing, by the terminal, DAI counting separately for the following DCIs, and separately generating three sub-codebooks:

fourth DCI not for scheduling a scheduled cell configured with CBG, wherein the fourth DCI is used for scheduling one PDSCH;
fourth DCI for scheduling a scheduled cell configured with CBG; and
first DCI not for scheduling a scheduled cell configured with CBG;
or
performing, by the terminal, DAI counting for the fourth DCI for scheduling a scheduled cell configured with CBG and the first DCI not for scheduling a scheduled cell configured with CBG, and performing DAI counting for the fourth DCI not for scheduling a scheduled cell configured with CBG, to generate two sub-codebooks, wherein HARQ ACKs for PDSCHs scheduled by the fourth DCI not for scheduling a scheduled cell configured with CBG are in one sub-codebook; and HARQ ACKs for PDSCHs scheduled by the first DCI for scheduling a scheduled cell configured with CBG and those scheduled by the first DCI not for scheduling a scheduled cell configured with CBG are in one sub-codebook.

23. The method according to claim 15 or 20, wherein
the following schedulings are allowed to be simultaneously configured for scheduling cells in a same serving cell group: scheduling for scheduling PDSCHs of a plurality of cells by one DCI, and scheduling for scheduling CBG-based PDSCHs by one DCI.

24. The method according to claim 1, wherein the determining, by a terminal, a HARQ ACK bit corresponding to a PDSCH scheduled by each first DCI of at least one first DCI comprises:

performing, by the terminal, C-DAI and/or T-DAI counting separately for the following DCIs, and separately generating three sub-codebooks:

fourth DCI, wherein the fourth DCI is used for scheduling one PDSCH;
second DCI, wherein the second DCI is used for scheduling a plurality of PDSCHs of one cell; and
the first DCI.

25. The method according to claim 1, wherein the determining, by a terminal, a HARQ ACK bit corresponding to a PDSCH scheduled by each first DCI of at least one first DCI comprises:

performing, by the terminal, C-DAI and/or T-DAI counting for second DCI and the first DCI, and performing C-DAI and/or T-DAI counting for fourth DCI, to generate two sub-codebooks; wherein
HARQ ACKs for PDSCHs scheduled by the second DCI and the first DCI are in one sub-codebook, and HARQ ACKs for PDSCHs scheduled by the fourth DCI are in one sub-codebook, wherein the fourth DCI is used for scheduling one PDSCH.

26. The method according to claim 5, wherein the determining, by a terminal, a HARQ ACK bit corresponding to a PDSCH scheduled by each first DCI of at least one first DCI comprises:

for the first quantity of scheduling cells, monitoring, by the terminal, first DCI in each scheduling cell at each PDCCH monitoring occasion; and
generating, by the terminal, a fifth quantity of HARQ ACK bits for each scheduling cell according to the detected first DCI of the scheduling cell; wherein
the scheduling cell is a cell configured to transmit first DCI or a cell configured to schedule a plurality of other cells; and
the fifth quantity is a maximum value of a first maximum value and a second maximum value, wherein the first maximum value is a maximum value of first HARQ ACK bit quantities for scheduling cells configured with the first DCI, and the second maximum value is a maximum value of third HARQ ACK bit quantities for scheduling cells configured with second DCI.

27. The method according to claim 26, wherein the maximum number of PDSCHs allowed to be scheduled by the first DCI is the same as that allowed to be scheduled by the second DCI.

28. The method according to claim 26, wherein the first DCI and the second DCI are not the same DCI.

29. The method according to claim 24 or 25, wherein the following scheduling is allowed to be configured simultaneously for scheduling cells in a same serving cell group: scheduling for scheduling PDSCHs of a plurality of cells by one DCI, and scheduling for scheduling a plurality of PDSCHs of one cell by one DCI.

30. The method according to claim 24 or 25, wherein whether a T-DAI is present in the first DCI is specified by a protocol or configured by a higher layer.

31. The method according to claim 1, further comprising:
in a case that the first DCI indicates a codeword of a scheduled cell being 2 and a maximum codeword of the scheduled cell configured by a higher layer is 1, transmitting, by the terminal, one transport block to the scheduled cell based on information related to the 1st transport block in the first DCI.

32. The method according to claim 1, wherein the determining, by a terminal, a HARQ ACK bit corresponding to a PDSCH scheduled by each first DCI of at least one first DCI comprises:
if one cell is actually scheduled by the first DCI, or a cell actually scheduled by the first DCI is bound to feedback of 1 bit for a same transport block, HARQ ACKs for PDSCHs scheduled by the first DCI and fourth DCI are in a same sub-codebook, wherein the fourth DCI is used for scheduling one PDSCH.

33. The method according to claim 32, wherein

the following schedulings are not allowed to be simultaneously configured for scheduling cells in a same serving cell group: scheduling for scheduling PDSCHs of a plurality of cells by one DCI, scheduling for scheduling a plurality of PDSCHs of one cell by one DCI, and scheduling for scheduling CBG-based PDSCHs by one DCI;

or

the following schedulings are allowed to be simultaneously configured for scheduling cells in a same serving cell group: scheduling for scheduling PDSCHs of a plurality of cells by one DCI, and scheduling for scheduling a plurality of PDSCHs of one cell by one DCI;

or

the following schedulings are allowed to be simultaneously configured for scheduling cells in a same serving cell group: scheduling for scheduling PDSCHs of a plurality of cells by one DCI, and scheduling for scheduling CBG-based PDSCHs by one DCI.

34. A HARQ ACK feedback method, comprising:
receiving, by a network-side device, a HARQ ACK codebook sent by a terminal, wherein the HARQ ACK codebook comprises HARQ ACK bits corresponding to PDSCHs scheduled by first DCI, and each first DCI is used for scheduling PDSCHs of a plurality of cells.

35. The method according to claim 34, wherein the number of HARQ ACK bits corresponding to PDSCHs scheduled by the first DCI is a second quantity; and

the second quantity is a maximum value of first HARQ ACK bit quantities for scheduling cells in a first quantity of scheduling cells; wherein
the first HARQ ACK bit quantity is related to at least one of the following information:

the maximum number of codewords that is configured for a scheduled cell scheduled by the first DCI of the scheduling cell; and
the maximum number of PDSCHs allowed to be scheduled by the first DCI of the scheduling cell, or the maximum number of scheduled cells allowed to be scheduled by the first DCI of the scheduling cell, or a preset quantity of PDSCHs, or a preset quantity of scheduled cells;
or
the second quantity is a maximum value of second HARQ ACK bit quantities for scheduling cells in the first quantity of scheduling cells; wherein
the second HARQ ACK bit quantity is related to at least one of the following information:

the maximum number of codewords that is configured for a scheduled cell scheduled by the first DCI of the scheduling cell; and
a maximum value of third HARQ ACK bit quantities corresponding to a cell combination allowed to be scheduled by the first DCI of the scheduling cell, wherein the third HARQ ACK bit quantity is a sum of the maximum number of codewords of the cell combination allowed to be scheduled by the first DCI.

36. The method according to claim 34, wherein the HARQ ACK codebook comprises a first sub-codebook and a second sub-codebook, a HARQ ACK of a PDSCH scheduled by fourth DCI is in the first sub-codebook, and a HARQ ACK of a PDSCH scheduled by the first DCI is in the second sub-codebook, wherein the fourth DCI is used for scheduling one PDSCH.

37. The method according to claim 35, wherein

the following schedulings are not allowed to be simultaneously configured for scheduling cells in a same serving cell group: scheduling for scheduling PDSCHs of a plurality of cells by one DCI, scheduling for scheduling a plurality of PDSCHs of one cell by one DCI, and scheduling for scheduling CBG-based PDSCHs by one DCI;
or
the following schedulings are allowed to be simultaneously configured for scheduling cells in a same serving cell group: scheduling for scheduling PDSCHs of a plurality of cells by one DCI, and scheduling for scheduling a plurality of PDSCHs of one cell by one DCI.

38. The method according to claim 34, wherein the number of HARQ ACK bits corresponding to PDSCHs scheduled by the first DCI is a fourth quantity;

the fourth quantity is a maximum value of first HARQ ACK bit quantities for scheduling cells in a third quantity of scheduling cells; and
the first HARQ ACK bit quantity is related to at least one of the following information:

the maximum number of CBGs configured for a cell configured with CBG;

the maximum number of codewords for a scheduled cell configured with CBG; and

the maximum number of PDSCHs allowed to be scheduled by the first DCI of the scheduling cell, or the maximum number of scheduled cells allowed to be scheduled by the first DCI of the scheduling cell, or a preset quantity of PDSCHs, or a preset quantity of scheduled cells;

or

the first HARQ ACK bit quantity is related to at least one of the following information:

the maximum number of CBGs configured for a scheduled cell that is scheduled by the first DCI and configured with CBG;

the maximum number of codewords for the scheduled cell that is scheduled by the first DCI and configured with CBG; and

the maximum number of PDSCHs allowed to be scheduled by the first DCI of the scheduling cell, or the maximum number of scheduled cells allowed to be scheduled by the first DCI of the scheduling cell, or a preset quantity of PDSCHs, or a preset quantity of scheduled cells.

39. The method according to claim 38, wherein

the following schedulings are allowed to be simultaneously configured for scheduling cells in a same serving cell group: scheduling for scheduling PDSCHs of a plurality of cells by one DCI, and scheduling for scheduling CBG-based PDSCHs by one DCI.

40. A HARQ ACK feedback apparatus, comprising:

a determining module, configured to determine a HARQ ACK bit corresponding to a PDSCH scheduled by each first DCI of at least one first DCI, wherein each first DCI is used for scheduling PDSCHs of a plurality of cells; and

a constructing module, configured to construct a HARQ ACK codebook based on the HARQ ACK bits.

41. A HARQ ACK feedback apparatus, comprising:

a receiving module, configured to receive a HARQ ACK codebook sent by a terminal, wherein the HARQ ACK codebook comprises HARQ ACK bits corresponding to PDSCHs scheduled by first DCI, and each first DCI is used for scheduling PDSCHs of a plurality of cells.

42. A terminal, comprising a processor and a memory, wherein a program or instructions capable of running on the processor are stored in the memory, and when the program or the instructions are executed by the processor, the steps of the HARQ ACK feedback method according to any one of claims 1 to 33 are implemented.

43. A network-side device, comprising a processor and a memory, wherein the memory stores a program or instructions capable of running on the processor, wherein when the program or the instructions are executed by the processor, the steps of the HARQ ACK feedback method according to any one of claims 34 to 39 are implemented.

44. A readable storage medium, wherein the readable storage medium stores a program or instructions, and when the program or instructions are executed by a processor, the HARQ ACK feedback method according to any one of claims 1 to 33 are implemented, or the steps of the HARQ ACK feedback method according to any one of claims 34 to 39 are implemented.

FIG. 1

(C-DAI, T-DAI)

FIG. 2

Determine a HARQ ACK bit corresponding to a PDSCH scheduled by each first DCI in at least one first DCI, where each first DCI is used for scheduling PDSCHs of a plurality of cells — 31

Constructs a HARQ ACK codebook based on the HARQ ACK bits — 32

FIG. 3

Receive a HARQ ACK codebook sent by a terminal, where the HARQ ACK codebook includes HARQ ACK bits corresponding to PDSCHs scheduled by first DCI, and the first DCI is used for scheduling PDSCHs of a plurality of cells — 41

FIG. 4

50

Determining module — 51

Constructing module — 52

FIG. 5

60

Receiving module — 61

FIG. 6

FIG. 7

80

| | | |
|---|---|---|
| 81 — Radio frequency unit | 810 Processor | Network module — 82 |
| 89 — Memory: Application program / Operating system | | Audio output unit — 83 |
| 88 — Interface unit | | 84 Input unit: Graphics processing unit — 841 / Microphone — 842 |
| 87 User input unit: 871 — Touch panel / 872 — Other input devices | | 86 Display unit: Display panel — 861 |
| | Sensor — 85 | |

FIG. 8

FIG. 9

<div align="center">**INTERNATIONAL SEARCH REPORT**</div>

| International application No. |
| --- |
| **PCT/CN2023/087584** |

| **A.** | **CLASSIFICATION OF SUBJECT MATTER** |
| --- | --- |

H04L 1/16(2023.01)i; H04W 72/20(2023.01)i

According to International Patent Classification (IPC) or to both national classification and IPC

| **B.** | **FIELDS SEARCHED** |
| --- | --- |

Minimum documentation searched (classification system followed by classification symbols)

IPC: H04L, H04W

Documentation searched other than minimum documentation to the extent that such documents are included in the fields searched

Electronic data base consulted during the international search (name of data base and, where practicable, search terms used)

CNTXT, DWPI, ENTXT, CNKI, 3GPP: 多, 小区, 下行控制信息, 码本, multi+, cell, DCI, codebook, multi-cell, mcDCI, HARQ, ACK, PDSCH

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| X | CN 113259067 A (BEIJING UNISOC COMMUNICATION TECHNOLOGY CO., LTD.) 13 August 2021 (2021-08-13) description, paragraphs [0142]-[0176] | 1-44 |
| A | CN 113473634 A (INTEL CORP.) 01 October 2021 (2021-10-01) entire document | 1-44 |
| A | US 2021377996 A1 (ACER INCORPORATED) 02 December 2021 (2021-12-02) entire document | 1-44 |
| A | VIVO. "Discussion on Joint Scheduling" *3GPP TSG RAN WG1 #105-e R1-2104392*, 27 May 2021 (2021-05-27), entire document | 1-44 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **02 July 2023** | **07 July 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2023/087584** |

| Patent document cited in search report | | | Publication date (day/month/year) | Patent family member(s) | | | Publication date (day/month/year) |
| --- | --- | --- | --- | --- | --- | --- | --- |
| CN | 113259067 | A | 13 August 2021 | WO | 2021160047 | A1 | 19 August 2021 |
| | | | | KR | 20220133298 | A | 04 October 2022 |
| | | | | CN | 115378555 | A | 22 November 2022 |
| | | | | EP | 4106252 | A1 | 21 December 2022 |
| | | | | US | 2023090792 | A1 | 23 March 2023 |
| | | | | JP | 2023513399 | W | 30 March 2023 |
| CN | 113473634 | A | 01 October 2021 | | None | | |
| US | 2021377996 | A1 | 02 December 2021 | JP | 2021190998 | A | 13 December 2021 |
| | | | | AU | 2021202964 | A1 | 16 December 2021 |
| | | | | TW | 202145827 | A | 01 December 2021 |
| | | | | KR | 20210148928 | A | 08 December 2021 |
| | | | | EP | 3917058 | A1 | 01 December 2021 |
| | | | | CN | 113747591 | A | 03 December 2021 |
| | | | | IN | 202114023838 | A | 17 December 2021 |

Form PCT/ISA/210 (patent family annex) (July 2022)

**EP 4 510 480 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210382436